# EUROPEAN PATENT SPECIFICATION

(11) **EP 3 779 530 B1**
(45) Date of publication and mention of the grant of the patent: **18.06.2025**
(21) Application number: 19781870.1
(22) Date of filing: 04.04.2019
(51) Int. Cl.: G02B 5/23, C08G 18/42, C08G 18/44, C09J 11/06, C09J 175/04, C09K 9/02, G02C 7/10

(54) **PHOTOCHROMIC ADHESIVE COMPOSITION, PHOTOCHROMIC LAYERED BODY, AND OPTICAL ARTICLE USING SAID PHOTOCHROMIC LAYERED BODY**
PHOTOCHROME KLEBSTOFFZUSAMMENSETZUNG, PHOTOCHROMER SCHICHTKÖRPER UND OPTISCHER ARTIKEL MIT VERWENDUNG DES BESAGTEN PHOTOCHROMEN SCHICHTKÖRPERS
COMPOSITION ADHÉSIVE PHOTOCHROMIQUE, CORPS STRATIFIÉ PHOTOCHROMIQUE ET ARTICLE OPTIQUE UTILISANT LEDIT CORPS STRATIFIÉ PHOTOCHROMIQUE

(30) Priority: 05.04.2018 JP 2018073508
(43) Date of publication of application: 17.02.2021
(73) Proprietor: Tokuyama Corporation, Shunan-shi, Yamaguchi 745-8648 (JP)
(72) Inventor: HIRAREN, Toshimitsu, Shunan-shi, Yamaguchi 745-8648 (JP); MORI, Katsuhiro, Shunan-shi, Yamaguchi 745-8648 (JP); MOMODA, Junji, Shunan-shi, Yamaguchi 745-8648 (JP)
(74) Representative: Kraus & Lederer PartGmbB
(86) International application number: PCT/JP2019/014976
(87) International publication number: WO 2019/194281

(56) References cited:
- WO-A1-2012/141250
- WO-A1-2012/141250
- US-A1- 2011 190 455
- US-A1- 2014 042 377

## Description

### Technical Field

The present invention relates to a novel photochromic adhesive composition having adhesiveness. The present invention relates to a novel photochromic adhesive composition capable of bonding optical sheets to each other, especially optical sheets of an organic resin even at high temperatures and capable of exhibiting excellent photochromic characteristics. Further, the present invention relates to a novel photochromic laminate and a novel optical article that are obtained using the photochromic adhesive composition. In the present invention, a urethane (urea) resin includes both a urethane resin containing a urethane bond alone, and a urethane-urea resin containing both a urethane bond and a urea bond.

### Background Art

Recently especially in United States, the needs is rapidly increasing for a plastic substrate using a polycarbonate resin of transparent and having excellent impact resistance, for the use of antiglare sunglasses. Further, in regards with such plastic sunglasses, photochromic plastic sunglasses are rapidly becoming popular which can control the antiglareness by changing a transparency depending on the surrounding brightness by combination with a photochromic dye.

However, it is not always easy to work photochromic plastic sunglasses. For example, in the case of using a photochromic coating material prepared by adding a photochromic agent to an acrylate copolymer (see PTL 1), there still remains room for further improvement in the following points. According to the method, a polycarbonate resin is injection-molded into a mold loaded with a composite film having a photochromic coating film of the photochromic coating material formed on the surface of a polycarbonate film. In this method, the adhesiveness to the polycarbonate film is insufficient probably because of the property of the acrylate copolymer, and a sunglass having good photochromic characteristics is difficult to produce.

As a method of producing a synthetic resin laminate having good photochromic characteristics, the following method is known. Specifically, first, a resin layer having photochromic characteristics is continuously formed by coating on one surface of a transparent synthetic resin layer of a polycarbonate sheet or the like that continuously moves. Next, after the resin layer is dried (the resin layer becomes an adhesive layer), another transparent sheet is stuck thereto, and such methods are proposed (see PTL 2 and PTL 3). However, in these methods, the resin composition for forming the resin layer having photochromic characteristics (specifically, a polyurethane resin composition) contains a solvent such as tetrahydrofuran or toluene, and therefore, when the resin composition is applied to a polycarbonate sheet or the like, the transparent sheet may dissolve. As a result, there occur problems of poor appearance and degradation of photochromic characteristics owing to the synthetic resin having dissolved in the urethane resin.

Regarding the method described in PTL 1, there is known a method of using "a laminate sheet bonded with a polycarbonate sheet via a photochromic dye-containing polyurethane resin adhesive layer" in place of the composite film in the method (see PTL 4 and PTL 5). In this method, however, the adhesiveness and the heat resistance of the polycarbonate sheet in the laminate sheet is insufficient. Consequently, in the case where an optical article is produced by loading the laminate in a mold and then injection-molding a polycarbonate resin into the mold, there still occur problems of peeling or optical strain in the resultant optical article.

US 2011/190455 A1 describes a bi-photochromic molecule which comprises two photochromic moieties linked via a polydialkylsiloxane oligomer, an ophthalmic lens which comprises the bi-photochromic molecule and a polymeric host material which comprises the bi-photochromic molecule.

WO 2012/141250 A1 relates to the problem to provide a photochromic composition which functions as an adhesive layer for bonding optical sheets comprising a polycarbonate resin or the like and which can yield an optical sheet laminate having excellent tight adhesion, heat resistance, solvent resistance and photochromic properties, particularly, a photochromic composition capable of yielding an optical sheet laminate such that, when a polymerizable monomer is polymerized with the optical sheet laminate buried therein, the elution of the photochromic composition from the optical sheet laminate can be minimized. As a solution to the problem, the document describes a photochromic composition which is characterized by containing (A) a polyurethane resin having an isocyanurate skeleton and (B) a photochromic compound.

US 2014/042377 A1 describes a photochromic polymer comprising at least two photochromic moieties linked by a straight or branched chain polymer selected from the group consisting of poly(C2 to C4 alkylene oxide), poly[C1 to C10 alkoxy substituted (C2 to C4 alkylene oxide)] and poly[C1 to C-15 acyloxy substituted (C2 to C4 alkylene oxide)].

### Citation List

### Patent Literature

PTL 1: JP 61-5910 A
PTL 2: WO2002/099513
PTL 3: JP 2002-196103 A
PTL 4: JP 2003-519398 A
PTL 5: US 2004-096666 A
PTL 6: WO2013/099640
PTL 7: US 2017-0327736 A

### Summary of Invention

### Technical Problem

On the other hand, development of a photochromic adhesive composition having high heat resistance is being promoted (for example, see PTLs 6 and 7). In these methods, a photochromic adhesive layer having high heat resistance is used, which is an adhesive agent mainly composed of a urethane-based resin and in which a prepolymer having a reactive group at the terminal is crosslinked or a main polymer chain is crosslinked with a polyisocyanate compound.

However, in the case of using the above-mentioned photochromic adhesive composition having good heat resistance, there still remains room for development in the following points. Specifically, in the above-mentioned methods, there remains room for development in that higher photochromic characteristics required recently in the art could not be maintained.

Accordingly, a first object of the present invention is to provide a photochromic adhesive composition which, when used as an adhesive layer for bonding optical sheets, has excellent adhesiveness and heat resistance and can exhibit excellent photochromic performance.

A second object of the present invention is to provide a photochromic laminate including a laminate structure where optical sheets are bonded via a photochromic adhesive layer, and to provide a photochromic laminate excellent in adhesiveness, excellent in heat resistance and having excellent photochromic characteristics.

A third object of the present invention is provide an optical article using the above-mentioned photochromic laminate and excellent in adhesiveness and photochromic characteristics.

### Solution to Problem

The present inventors have repeatedly made assiduous studies for solving the above-mentioned problems. With that, the present inventors have made various studies about a combination of a structure of a photochromic compound and a structure of a urethane (urea) resin. As a result, the present inventors have found that a photochromic adhesive composition prepared by combining a specific urethane (urea) adhesive resin and a photochromic compound having a specific structure, and having a specific softening point can solve the above-mentioned problems, and have completed the present invention.

Specifically, a first aspect of the present invention is:
a photochromic adhesive composition containing:
(A) a photochromic compound having, as a substituent, a molecular chain having a molecular weight of 300 or more (hereinafter may be simply referred to as "component (A)"), and
(B) an adhesive urethane (urea) resin (hereinafter may be simply referred to as "component (B)"),
and having a softening point measured according to the method described in JIS K7196 of 140 to 220°C, wherein the photochromic compound (A) has at least one basic skeleton represented by any one of formulae (3) to (7) specified in claim 1, and the blending amount of the photochromic compound (A) is 0.1 to 20.0 parts by mass relative to 100 parts by mass of the adhesive urethane (urea) resin (B).

A second aspect of the present invention is a photochromic laminate including a laminate structure formed by bonding two optical sheets (D) facing each other via an adhesive layer formed from the photochromic adhesive composition.

A third aspect of the present invention is an optical article produced by laminating a synthetic resin layer (E) formed of a resin selected from a polyester resin, a polyamide resin, an allylic resin, a (meth)acrylic resin, a polyurethane resin, a polyurethane-urea resin, a polythiourethane resin, an polyepoxy resin, a polythioepoxy resin and a polycarbonate resin, on at least one outer surface of the photochromic laminate.

### Advantageous Effects of Invention

According to the present invention, there can be provided a photochromic adhesive composition capable of firmly bonding optical sheets to each other even at high temperatures and capable of exhibiting excellent photochromic characteristics. Accordingly, a photochromic laminate produced by bonding optical sheets with an adhesive layer formed of the photochromic adhesive composition of the present invention hardly experiences molding failure such as peeling even though a relatively high-temperature resin is laminated thereon by injection molding or the like. In addition, the resultant optical article can exhibit excellent photochromic characteristics.

### Brief Description of Drawings

Fig. 1 is a cross-sectional schematic view showing a preferred structure of a photochromic laminate of the present invention.
Fig. 2 shows measurement data (measurement data in thermal mechanical analysis) in measuring the softening point of a photochromic adhesive composition (adhesive layer) used in Example 15.

### Description of Embodiments

The present invention is a photochromic adhesive composition containing
(A) a photochromic compound and (B) an adhesive urethane (urea) resin as defined in claim 1. With that,
   the photochromic compound (A) has, as a substituent, a molecular chain having a molecular weight of 300 or more, and
   the photochromic adhesive composition contains:
(B) an adhesive urethane (urea) resin,
and has a softening point of 140 to 220°C and has heat resistance as further defined in claim 1. The softening point is a value measured according to the measurement method described in the section of Examples. The photochromic adhesive composition of the present invention is especially excellent in adhesiveness to optical sheets.

Hereinafter these are described sequentially. First described is the photochromic compound (A).

### <(A) Photochromic Compound>

The photochromic compound (A) for use in the present invention can be any arbitrary one appropriately selected from known compounds, so far as having, as a substituent, a molecular chain having a molecular weight of 300 or more and at least one basic skeleton represented by any one of formulae (3) to (7) specified in claim 1. A molecular chain having a molecular weight of 300 or more is a high-molecular and, therefore, in producing a photochromic compound, the resultant compound may not have one kind of a molecular chain but may have plural kinds of molecular chains. In such a case, the molecular weight of the molecular chain may be an average value of plural molecular chains. The average value may be a number-average molecular weight. The molecular weight can be identified from the kind of the raw material in production of the photochromic compound, and in the case of identification from products, the molecular weight can be confirmed according to any known means of NMR, IR, or mass analysis. In the present invention, the molecular weight is determined from the raw materials used.

As having a molecular chain having a molecular weight of 300 or more, the component (A) is considered to be able to exhibit high-level photochromic characteristics even in the component (B) having high heat resistance and described in detail hereinunder. The molecular weight of the molecular chain is, in consideration of the photochromic characteristics, the blending amount and the productivity of the component (A) itself, preferably 300 to 25,000, more preferably 400 to 20,000, even more preferably 440 to 15,000, further more preferably 500 to 10,000. Further, in consideration of the high-level photochromic characteristics, the dispersibility of the component (A) in an adhesive layer, and the productivity of the component (A) itself, the molecular weight of the molecular chain is preferably 700 to 5,000, more preferably 1,000 to 3,000.

The number of the molecular chains is preferably at least 0.5 or more in one molecule of the photochromic compound. Specifically, even in the case where the number of the molecular chains is a fewest one, a structure formed by bonding two photochromic compounds via the molecular chain is preferred. The upper limit of the number of the molecular chain is, in consideration of a balance with the molecular weight of the molecular chain and of the photochromic characteristics, preferably 4, or preferably 2, or preferably 1, in one molecule of the photochromic compound.

Also preferably, the molecular structure to exhibit photochromic characteristics of the component (A) is such that a part of the molecule is cleaved by photoirradiation to produce color and the cleaved site is recombined to cause discoloration. Accordingly, for repeated reversible color production and color facing by the photochromic compound, presence of a free space not interfering with molecular movement in cleaving and recombination (freedom of molecule) is extremely important. In the case of a compound having such a molecular structure, especially it is considered that the compound can exhibit the effect of the molecular chain.

As the component (A), for example, photochromic compounds having the above-mentioned molecular chain are usable, as described in WO2000-015630, WO2004-041961, WO2005-105874, WO2005-105875, WO2006-022825, WO2009-146509, WO2010-20770, WO2012-121414, WO2012-149599, WO2012-162725, WO2012-176918, and WO2013-078086.

### <Preferred Photochromic Compound (A)>

In the present invention, the component (A) is preferably at least one photochromic compound selected from the following formulae (1) and (2):

PC-(L-Chain) (1)

PC-(L-Chain-L')-PC' (2)

In the formulae (1) and (2),
L and L' each represent a divalent organic group containing at least one group selected from a polyoxyalkylene chain, a (thio)ester group, and a (thio)amide group, and L and L' may be the same or different,
Chain represents a monovalent or divalent organic group containing at least one chain selected from a polysiloxane chain and a polyoxyalkylene chain,
the molecular weight of the total of L and Chain, or L, L' and Chain corresponds to the molecular weight of the above-mentioned molecular chain. Namely, the part of L and Chain in the formula (1), and the part of L, L' and Chain in the formula (2) each correspond to the molecular chain.

In the formula (1) or the formula (2),
PC or PC' is selected from a compound having a basic skeleton represented by any one of the following formulae (3) to (7):

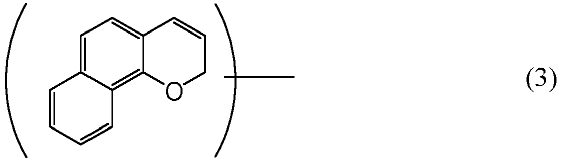

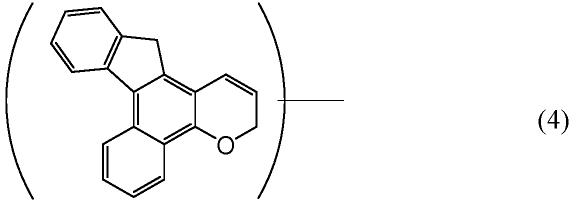

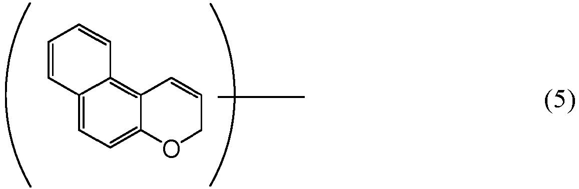

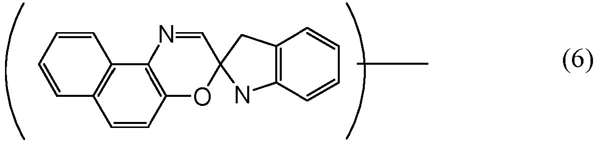

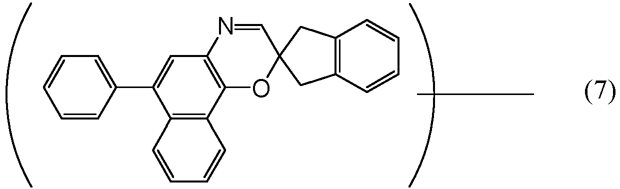

In the formulae (3) to (7), the parenthesized molecular structure is a basic skeleton of PC or PC', and the line indicates a bonding to L or L'.

In the basic skeleton represented by any one of the formulae (3) to (7):
among the carbon atoms or the nitrogen atoms optionally having a substituent, one atom may directly bond to the divalent organic group L or L', and the other atoms may have any other substituent, or
among the carbon atoms or the nitrogen atoms optionally having a substituent, one atom may bond to the divalent organic group L or L' via a substituent, and the other atoms may have any other substituent.

Specifically, a preferable component (A) preferably has the above-mentioned basic skeleton. With that, in the basic skeleton, among the carbon atoms or the nitrogen atoms optionally having a substituent, preferably, one atom directly bonds to L and Chain, or L, L' and Chain (molecular chain), and the other atoms preferably have any other substituent or a hydrogen atom.

Also preferably, in a preferable component (A), among the carbon atoms or the nitrogen atoms optionally having a substituent, one atom bonds to the molecular chain via a substituent, and the other atoms preferably have any other substituent or a hydrogen atom.

Further, PC and PC' may be the same or different.

Next, especially preferred basic skeletons of the formulae (3) to (7) are described. Preferably, PC and PC' are selected from compounds having a basic skeleton represented by any one of the following formulae (3') to (7').

### <( Basic Skeleton represented by formula (3') (preferred basic skeleton of formula (3))>

Of the basic skeleton represented by the formula (3), a preferred basic skeleton is a structure represented by the following formula (3'):

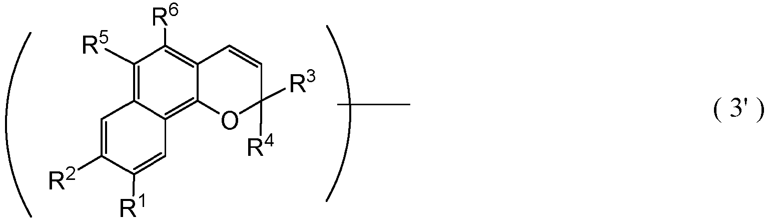

In the formula (3'), the parenthesized molecular structure is a basic skeleton of PC or PC', and the line indicates a bonding to L or L'.

### <Formula (3'); R¹ and R²>

R¹ and R² in the formula (3') each represent a hydrogen atom, a hydroxy group, an alkyl group having 1 to 6 carbon atoms a haloalkyl group having 1 to 6 carbon atoms, a cycloalkyl group having 3 to 8 carbon atoms and optionally having a substituent, an alkoxy group having 1 to 6 carbon atoms, an amino group, a substituted amino group, a heterocyclic group optionally having a substituent, a cyano group, a halogen atom, an alkylthio group having 1 to 6 carbon atoms, an arylthio group having 6 to 10 carbon atoms and optionally having a substituent, a nitro group, a formyl group, a hydroxycarbonyl group, an alkylcarbonyl group having 2 to 7 carbon atoms, an alkoxycarbonyl group having 2 to 7 carbon atoms, an aralkyl group having 7 to 11 carbon atoms and optionally having a substituent, an aralkoxy group having 7 to 11 carbon atoms and optionally having a substituent, an aryloxy group having 6 to 12 carbon atoms and optionally having a substituent, an aryl group having 6 to 12 carbon atoms and optionally having a substituent, a heteroaryl group having 3 to 12 carbon atoms and optionally having a substituent, a thiol group, an alkoxyalkylthio group having 2 to 9 carbon atoms, a haloalkylthio group having 1 to 6 carbon atoms, or a cycloalkylthio group having 3 to 8 carbon atoms and optionally having a substituent.

### <Formula (3'); R³ and R⁴>

R³ and R⁴ in the formula (3') each represent a hydrogen atom, an aryl group having 6 to 20 carbon atoms and optionally having a substituent, or a heteroaryl group having 3 to 20 carbon atoms and optionally having a substituent.

The substituent that the aryl group or the heteroaryl group has includes:
a substituent selected from a hydroxy group, an alkyl group having 1 to 6 carbon atoms, a haloalkyl group having 1 to 6 carbon atoms, a cycloalkyl group having 3 to 8 carbon atoms, an alkoxy group having 1 to 6 carbon atoms, an amino group, a heterocyclic group, a cyano group, a halogen atom, an alkylthio group having 1 to 6 carbon atoms, and an arylthio group having 6 to 10 carbon atoms and optionally having a substituent.

### <Formula (3'); R⁵ and R⁶>

R⁵ and R⁶ in the formula (3') include a hydrogen atom, a halogen atom, a carboxy group, an acetyl group, an alkyl group having 1 to 10 carbon atoms, an alkenyl group having 2 to 10 carbon atoms, an alkoxy group having 1 to 10 carbon atoms, a hydroxyalkyl group having 1 to 10 carbon atoms, an alkyl group having 1 to 10 carbon atoms and substituted with an alkoxy group having 1 to 10 carbon atoms, an aminoalkyl group having 1 to 10 carbon atoms, a cycloalkyl group having 3 to 20 carbon atoms, an aryl group having 6 to 20 carbon atoms and optionally having a substituent, an alkoxycarbonyl group having 2 to 15 carbon atoms, or a heteroaryl group having 3 to 20 carbon atoms and optionally having a substituent.

### <Formula (3'); molecular chain, in the case where any of R¹ to R⁶ has a molecular chain>

The molecular chain that the basic skeleton represented by the formula (3') has can directly bond to the basic skeleton via a bond of any one of R¹ to R⁶. Namely, any one of R¹ to R⁶ can be -(L-Chain) or -(L-Chain-L')- to be described in detail hereinunder (one of R¹ to R⁶ may be a molecular chain). (R¹ to R⁶) is to collectively express R¹, R², R³, R⁴, R⁵ and R⁶. Hereinunder the same shall apply to the expression (R¹ to R⁶).

Among R¹ to R⁶, the substituent of a group optionally having a substituent may be a "molecular chain".

Further, the structure may have a molecular chain via any one substituent of R¹ to R⁶ (excepting a hydrogen atom). For example, in the case where an alkyl group having a molecular chain at the terminal thereof (having a molecular chain via an alkyl group), naturally the alkyl group of R¹ to R⁶ is an alkylene group.

### <Formula (3'); preferred groups of R¹ to R⁶>

Among the above-mentioned groups, in consideration of the coloration density and the coloration tone of the resultant photochromic compound, preferred R¹ to R⁶ in the formula (3') are as mentioned below.

Preferred R¹ and R² include a hydrogen atom, the above-mentioned alkyl group, the above-mentioned alkoxy group, the above-mentioned heterocyclic group, the above-mentioned aryl group and the above-mentioned arylthio group.

Preferred R³ and R⁴ include the above-mentioned alkyl group, the above-mentioned alkoxy group, the above-mentioned substituted amino group, the above-mentioned heterocyclic group, or an aryl group having 6 to 20 carbon atoms and optionally having a substituent.

Preferred R⁵ and R⁶ include the above-mentioned alkyl group, the above-mentioned alkenyl group, the above-mentioned alkoxy group, the above-mentioned aryl group, the above-mentioned alkoxycarbonyl group, or the above-mentioned heteroaryl group. Also preferably, at least any one group is -(L-Chain) or -(L-Chain-L')- to be mentioned in detail hereinunder.

Also preferably, the molecular chain substitutes for any of R³, R⁴, R⁵ or R⁶.

### <Basic Skeleton represented by formula (4') (preferred basic skeleton of formula (4) >

Of the basic skeleton represented by the formula (4), a preferred basic skeleton is a structure represented by the following formula (4'):

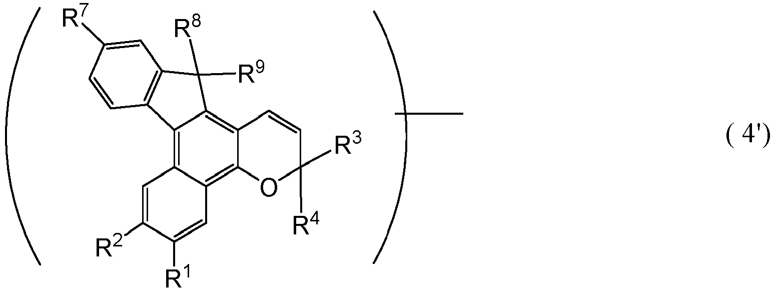

### <Formula (4'); R¹, R², R³ and R⁴>

R¹ to R⁴ in the formula (4') include the same groups as those described hereinabove in the section of <Formula (3'); R¹ and R²> and the section of <Formula (3'); R³ and R⁴> for the formula (3').

### <Formula (4'); R⁷>

R⁷ in the formula (4') includes the same groups as those described hereinabove in the section of <Formula (3'); R¹ and R²> for the formula (3').

### <Formula (4'): R⁸ and R⁹>

R⁸ and R⁹ in the formula (4') each represent a hydrogen atom, a hydroxy group, an alkyl group having 1 to 6 carbon atoms, a haloalkyl group having 1 to 6 carbon atoms, a cycloalkyl group having 3 to 8 carbon atoms and optionally having a substituent, an alkoxy group having 1 to 6 carbon atoms, an amino group, a substituted amino group, a heterocyclic group optionally having a substituent, a cyano group, a nitro group, an alkoxyalkyl group having 1 to 6 carbon atoms, a formyl group, a hydroxycarbonyl group, an alkylcarbonyl group having 2 to 7 carbon atoms, an alkoxycarbonyl group having 2 to 7 carbon atoms, a halogen atom, an aralkyl group having 7 to 11 carbon atoms and optionally having a substituent, an aralkoxy group having 7 to 11 carbon atoms and optionally having a substituent, an aryl group having 6 to 12 carbon atoms and optionally having a substituent, a thiol group, an alkylthio group having 1 to 6 carbon atoms, a cycloalkylthio group having 3 to 8 carbon atoms, a heterocyclic group optionally having a substituent, or an arylthio group having 6 to 10 carbon atoms and optionally having a substituent.

In the formula (4'), R⁸ and R⁹ may together form, along with the 13-position carbon atom to which they bond, an aliphatic ring having 3 to 20 ring carbon atoms, a condensed polycyclic ring of the aliphatic ring condensed with an aromatic ring or an aromatic hetero ring, a hetero ring having 3 to 20 ring atoms, or a condensed polycyclic ring of the hetero ring condensed with an aromatic ring or an aromatic hetero ring, and these rings may have a substituent. Or they may together form, along with the 13-position carbon atom to which they bond, an aliphatic hydrocarbon ring having 3 to 20 ring carbon atoms, a condensed polycyclic ring of the aliphatic hydrocarbon ring condensed with an aromatic ring or an aromatic hetero ring, a hetero ring having 3 to 20 ring atoms, or a condensed polycyclic ring of the hetero ring condensed with an aromatic ring or an aromatic hetero ring.

### <Formula (4'); molecular chain, in the case where any of R¹ to R⁴, and R⁷ to R⁹ has a molecular chain>

The molecular chain that the basic skeleton represented by the formula (4') has can directly bond to the basic skeleton via a bond of any one of R¹ to R⁴, and R⁷ to R⁹. Namely, any one of R¹ to R⁴, and R⁷ to R⁹ can be -(L-Chain) or -(L-Chain-L')- to be described in detail hereinunder (one of R¹ to R⁴, and R⁷ to R⁹ may be a molecular chain).

Among R¹ to R⁴, and R⁷ to R⁹, the substituent of a group optionally having a substituent may be a "molecular chain".

Further, the structure may have a molecular chain via any one substituent of R¹ to R⁴, and R⁷ to R⁹ (excepting a hydrogen atom).

### <Formula (4'); preferred groups of R¹ to R⁴, and R⁷ to R⁹>

Preferred R¹ to R⁴, and R⁷ to R⁹ in the formula (4') are mentioned below.

Preferred R¹, R², R³ and R⁴ are the same as those shown for the formula (3'); R⁷ is preferably a hydrogen atom, the above-mentioned alkoxy group, the above-mentioned heterocyclic group, or the above-mentioned aryl group; and R⁸ and R⁹ each are preferably the above-mentioned hydroxy group, the above-mentioned alkyl group, the above-mentioned alkoxy group, or also preferably, R⁸ and R⁹ together form a ring along with the 13-position carbon atom to which they bond. Also preferably, the molecular chain substitutes for any of R³, R⁴, or R⁷ to R⁹.

### <Basic Skeleton represented by formula (5') (preferred basic skeleton of formula (5)>

Of the basic skeleton represented by the formula (5), a preferred basic skeleton is a structure represented by the following formula (5'):

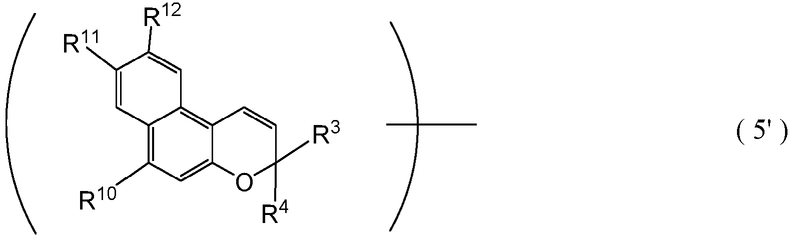

In the formula (5'), the parenthesized molecular structure is a basic skeleton of PC or PC', and the line indicates a bonding to L or L'.

### <Formula (5'); R³ and R⁴>

R³ and R⁴ in the formula (5') include the same groups as those described hereinabove in the section of <Formula (3'); R³ and R⁴> for the formula (3').

### <Formula (5'); R¹⁰, R¹¹ and R¹²>

R¹⁰, R¹¹ and R¹² in the formula (5') include the same groups as those described hereinabove in the section of <Formula (3'); R¹ and R²> for the formula (3').

### <Formula (5'); molecular chain, in the case where any of R³, R⁴ or R¹⁰ to R¹² has a molecular chain>

The molecular chain that the basic skeleton represented by the formula (5') has can directly bond to the basic skeleton via a bond of any one of R³, R⁴ or R¹⁰ to R¹². Namely, any one of R³, R⁴ or R¹⁰ to R¹² can be -(L-Chain) or -(L-Chain-L')- to be described in detail hereinunder (one of R³, R⁴ or R¹⁰ to R¹² may be a molecular chain).

Among R³, R⁴ or R¹⁰ to R¹², the substituent of a group optionally having a substituent may be a "molecular chain".

Further, the structure may have a molecular chain via any one substituent of R³, R⁴ or R¹⁰ to R¹² (excepting a hydrogen atom).

### <Basic Skeleton represented by formula (6') (preferred basic skeleton of formula (6)>

Of the basic skeleton represented by the formula (6), a preferred basic skeleton is a structure represented by the following formula (6'):

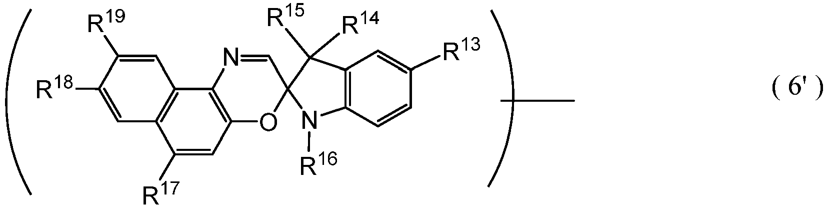

In the formula (6'), the parenthesized molecular structure is a basic skeleton of PC or PC', and the line indicates a bonding to L or L'.

### <Formula (6'); R¹³, R¹⁷, R¹⁸ and R¹⁹>

R¹³, R¹⁷, R¹⁸ and R¹⁹ in the formula (6') include the same groups as those described hereinabove in the section of <Formula (3'); R¹ and R²> for the formula (3').

### <Formula (6'); R¹⁶>

R¹⁶ in the formula (6') includes a hydrogen atom, a halogen atom, an alkyl group having 1 to 20 carbon atoms, a haloalkyl group having 1 to 5 carbon atoms, a dihaloalkyl group having 1 to 5 carbon atoms, a trihaloalkyl group having 1 to 5 carbon atom, a cycloalkyl group having 3 to 20 carbon atoms and optionally having a substituent, a bicycloalkyl group optionally having 6 to 20 carbon atoms and optionally having a substituent, and an aryl group having 6 to 20 carbon atoms and optionally having a substituent.

### <Formula (6'); R¹⁴ and R¹⁵>

R¹⁴ and R¹⁵ in the formula (6') include a hydrogen atom, a halogen atom, an alkyl group having 1 to 10 carbon atoms, and a cycloalkyl group having 3 to 20 carbon atoms and optionally having a substituent.

### <Formula (6'); molecular chain, in the case where any of R¹³ to R¹⁹ has a molecular chain>

The molecular chain that the basic skeleton represented by the formula (6') has can directly bond to the basic skeleton via a bond of any one of R¹³ to R¹⁹. Namely, any one of R¹³ to R¹⁹ can be -(L-Chain) or -(L-Chain-L')- to be described in detail hereinunder (one of R¹³ to R¹⁹ may be a molecular chain).

Among R¹³ to R¹⁹, the substituent of a group optionally having a substituent may be a "molecular chain".

Further, the structure may have a molecular chain via any one substituent of R¹³ to R¹⁹ (excepting a hydrogen atom).

### <Basic Skeleton represented by formula (7') (preferred basic skeleton of formula (7)>

Of the basic skeleton represented by the formula (7), a preferred basic skeleton is a structure represented by the following formula (7'):

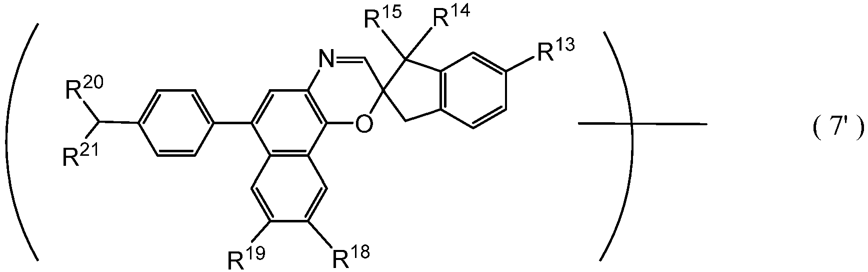

In the formula (7'), the parenthesized molecular structure is a basic skeleton of PC or PC', and the line indicates a bonding to L or L'.

### <Formula (7'); R¹³, R¹⁸ and R¹⁹>

R¹³, R¹⁸ and R¹⁹ in the formula (7') include the same groups as those described hereinabove in the section of <Formula (6'); R¹³, R¹⁷, R¹⁸ and R¹⁹> (<Formula (3'); R¹ and R²>) for the formula (6').

### <Formula (7'); R¹⁴ and R¹⁵>

R¹⁴ and R¹⁵ in the formula (7') include the same groups as those described hereinabove in the section of <Formula (6'); R¹⁴ and R¹⁵> for the formula (6').

### <Formula (7'); R²⁰ and R²¹>

R²⁰ and R²¹ in the formula (7') include the same groups as those described hereinabove in the section of <Formula (6'); R¹⁴ and R¹⁵> (<Formula (7'); R¹⁴ and R¹⁵>) for the formula (6').

### <Formula (7'); molecular chain, in the case where any of R¹³ to R¹⁵, and R¹⁸ to R²¹ has a molecular chain>

The molecular chain that the basic skeleton represented by the formula (7') has can directly bond to the basic skeleton via a bond of any one of R¹³ to R¹⁵, and R¹⁸ to R²¹. Namely, any one of R¹³ to R¹⁵, and R¹⁸ to R²¹ can be -(L-Chain) or -(L-Chain-L')- to be described in detail hereinunder (one of R¹³ to R¹⁵, and R¹⁸ to R²¹ may be a molecular chain).

Among R¹³ to R¹⁵, and R¹⁸ to R²¹, the substituent of a group optionally having a substituent may be a "molecular chain".

Further, the structure may have a molecular chain via any one substituent of R¹³ to R¹⁵, and R¹⁸ to R²¹ (excepting a hydrogen atom).

### <Component (A), preferred divalent organic group, L or L'>

In the formulae (1) and (2), L or L' is preferably a divalent bonding group containing at least one group selected from a polyoxyalkylene chain, a (thio)ester group and a (thio)amide group.

More specifically, a divalent organic group represented by the following formula (8) is preferred.

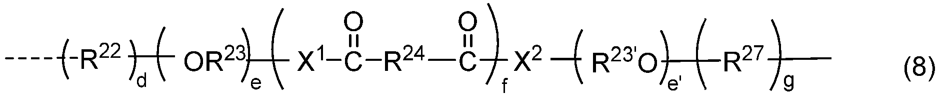

In the formula:
R²² is a divalent group, representing a linear or branched alkylene group having 1 to 20 carbon atoms, a cycloalkylene group having 3 to 12 ring carbon atoms and optionally having a substituent, an aryl group having 6 to 12 ring carbon atoms and optionally having a substituent, or a heterocyclic group having 3 to 12 ring atoms and optionally having a substituent;
R²³ is a divalent group, representing a linear or branched alkylene group having 1 to 20 carbon atoms, a cycloalkyl group having 3 to 12 ring carbon atoms and optionally having a substituent, or an aryl group having 6 to 12 ring carbon atoms and optionally having a substituent;
R²⁴ is a divalent group, representing a linear or branched alkylene group having 1 to 20 carbon atoms, a cycloalkyl group having 3 to 12 ring carbon atoms and optionally having a substituent, or an aryl group having 6 to 12 ring carbon atoms and optionally having a substituent;
R²⁷ is a divalent group, representing a linear or branched alkylene group having 1 to 20 carbon atoms, a cycloalkyl group having 3 to 12 ring carbon atoms and optionally having a substituent, an aryl group having 6 to 12 ring carbon atoms and optionally having a substituent, or a heterocyclic group having 3 to 12 ring atoms and optionally having a substituent;
X¹ and X² are divalent groups, each independently representing a direct bond, O, S, an amino group, a substituted amino group, a (thio)amide group, or a (thio)ester group;
R^{23'} is a divalent group, representing a linear or branched alkylene group having 1 to 20 carbon atoms, a cycloalkyl group having 3 to 12 ring carbon atoms and optionally having a substituent, or an aryl group having 6 to 12 ring carbon atoms and optionally having a substituent;
d represents an integer of 0 to 50, e represents an integer of 0 to 50, e' represents an integer of 0 to 50, f represents an integer of 0 to 50, g represents an integer of 0 to 50, and two e's may be the same or different;
when d is 2 or more, plural R²²'s may be the same as or different from each other;
when e is 2 or more, plural e units, divalent groups may be the same as or different from each other;
when e' is 2 or more, plural e' units, divalent groups may be the same as or different from each other;
when f is 2 or more, plural f units, divalent groups may be the same as or different from each other;
when g is 2 or more, plural g units, divalent groups may be the same as or different from each other.

L and L' may be the same as or different from each other, and the dotted line region indicates a bonding to a photochromic site. The photochromic site means PC or PC'.

In the above-mentioned formula (8), d is preferably 0; e, e', f and g are each independently preferably an integer of 0 to 2; and two e's may be the same or different. X¹ and X² each are preferably 0 (oxygen atom). R²³, R^{23'}, R²⁴ and R²⁷ are each independently preferably a linear or branched alkylene group having 1 to 5 carbon atoms.

Preferred examples of the above (8) includes divalent groups represented by the following formulae:

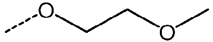

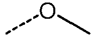

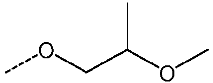

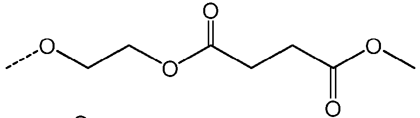

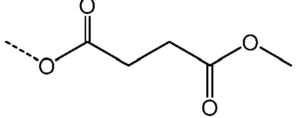

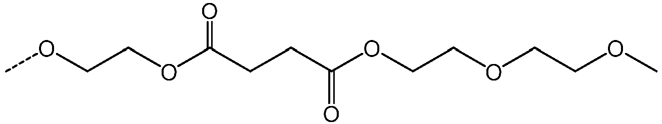

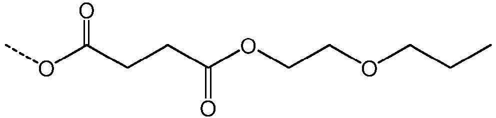

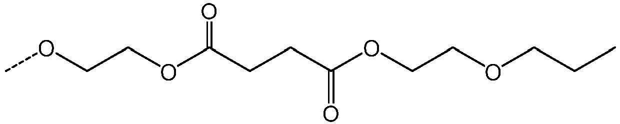

### <Component (A), preferred Chain part>

In the above-mentioned formulae (1) and (2), the "Chain" part is preferably a monovalent or divalent group containing at least one chain selected from a polyalkylene oxide chain, a polyester chain, a polyester polyether chain and a polysiloxane chain. Above all, a chain having a recurring unit represented by the following formulae (9a) to (9d) is preferred.

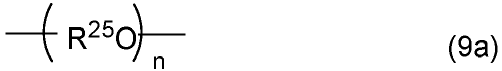

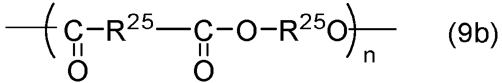

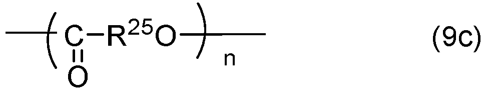

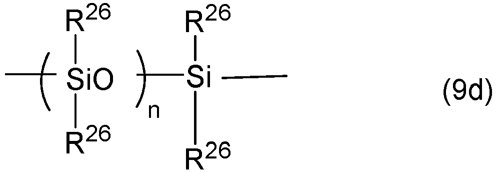

In the formulae (9a) to (9c):
R²⁵ represents a linear or branched alkylene group having 1 to 20 carbon atoms, and when one and the same molecule contains plural R²⁵'s, R²⁵'s may be the same as or different from each other;
n indicates a recurring unit of the oligomer chain group, representing an integer of 3 to 200, and the divalent groups of plural recurring units may be the same as or different from each other.

In the formula (9d):
R²⁶ represents a linear or branched alkyl group having 1 to 20 carbon atoms, or an aryl group having 6 to 14 carbon atoms, and when one and the same molecule contains plural R²⁶'s, R²⁶'s may be the same as or different from each other.

### <Preferred Component (A)>

In the present invention, for exhibiting excellent effects, photochromic compounds of the following combination are preferably used as the component (A). Namely, PC or PC' is one selected from naphthopyran structures of the above-mentioned formulae (3'), (4') and (5'), L and L' each are the formula (8), and the "Chain" part is one selected from the above-mentioned formulae (9a) to (9d).

Next, an adhesive urethane (urea) resin of the component (B) is described.

### <(B) Adhesive Urethane (urea) Resin>

In the present invention, the adhesive urethane (urea) resin (B) mainly determines the softening point of the photochromic adhesive composition. The component (B) needs to satisfy the requirement that the photochromic adhesive composition containing the component (A) and the component (B) has a softening point of 140 to 220°C. Consequently, though not specifically limited, the softening point of the component (B) is, for exhibiting an especially excellent effect and in the case of not using a component (C), preferably 140 to 220°C, more preferably 150 to 200°C, even more preferably 160 to 190°C. In the case of using the component (C) to be described in detail hereinunder, the crosslinking effect of the component (C) can be expected and therefore in the case, the softening point of the component (B) alone is preferably 120 to 220°C, more preferably 130 to 200°C, even more preferably 140 to 190°C, further more preferably 140 to 170°C. In the case of using the component (C), the softening point of the urethane (urea) resin formed of the component (B) crosslinked with the component (C) is preferably 140 to 220°C, more preferably 150 to 200°C, even more preferably 155 to 195°C, further more preferably 160 to 190°C.

In the present invention, the softening point indicates the photochromic adhesive composition. The softening point corresponds to the softening point of the adhesive layer containing a photochromic compound that forms a photochromic laminate to be described in detail hereinunder. Specifically, this is the softening point of the adhesive layer formed of a photochromic adhesive composition that bonds optical sheets (D). The softening point is the softening point of the adhesive layer containing a photochromic compound, but it is considered that the photochromic compound would have little influence on the softening point. Consequently, the softening point of the component (B), or the softening point of the reaction product of the component (B) and the component (C) (urethane (urea) resin) is preferably 140 to 220°C, more preferably 150 to 200°C, even preferably 155 to 195°C, further more preferably 160 to 190°C.

Using the softening point (B), or the urethane (urea) adhesive resin crosslinked with the component (C), a photochromic adhesive composition having a softening point of 140 to 220°C can be readily produced.

In the present invention, the component (B) is, from the viewpoint of adhesiveness and photochromic characteristics, preferably a urethane (urea) resin produced by reacting (B1) at least one polyol compound selected from a polycarbonate polyol and a polycaprolactone polyol having 2 or more hydroxy groups in the molecule and having a number-average molecular weight of 400 to 3000 (hereinafter may be simply referred to as "component (B1)"), and (B2) a polyisocyanate compound having 2 or more isocyanate groups in the molecule (hereinafter may be simply referred to as "component (B2)"). Hereinunder these components are described.

### Component (B1); polyol compound

The polyol compound for use for the urethane (urea) resin includes a polyether polyol, a polycarbonate polyol, a polycaprolactone polyol, and a polyester polyol. Above all, from the viewpoint of heat resistance, adhesiveness and photochromic characteristics, use of a polycarbonate polyol or a polycaprolactone polyol is preferred. The number-average molecular weight of the polyol compound is preferably 400 to 3000. Above all, from the viewpoint of heat resistance and photochromic characteristics, the number-average molecular weight is preferably 400 to 2500, more preferably 400 to 2000.

### Component (B2); polyisocyanate compound

The polyisocyanate compound for use for the urethane (urea) resin is, from the viewpoint t of weather resistance, preferably an aliphatic polyisocyanate compound or an alicyclic polyisocyanate compound. Specifically, examples thereof include an aliphatic polyisocyanate compound such as tetramethylene-1,4-diisocyanate, hexamethylene-1,6-diisocyanate, octamethylene-1,8-diisocyanate, and 2,2,4-trimethylhexane-1,6-diisocyanate; and an alicyclic polyisocyanate compound such as cyclohexane-1,3-diisocyanate, cyclohexane-1,4-diisocyanate, 2,4-methylcyclohexyl diisocyanate, 2,6-methylcyclohexyl diisocyanate, isophorone diisocyanate, norbornene diisocyanate, isomer mixture of 4,4'-methylenebis(cyclohexyl isocyanate), hexahydrotoluene-2,4-diisocyanate, hexahydrotoluene-2,6-diisocyanate, hexahydrophenylene-1,3-diisocyanate, and hexahydrophenylene-1,4-diisocyanate. Especially from the viewpoint of heat resistance, use of isophorone diisocyanate, isomer mixture of 4,4'-methylenebis(cyclohexyl isocyanate) or norbornene diisocyanate is preferred.

As the adhesive urethane (urea) resin (B) in the present invention, an active hydrogen-containing compound (B3) having 2 or more groups capable of reacting with an isocyanate group in the molecule and having a molecular weight of 50 to 300 (hereinafter may be simply referred to as "component (B3)") is also usable, in addition to the above-mentioned components (B1) and (B2). Hereinunder the component (B3) is described.

### Component (B3); active hydrogen-containing compound

The active hydrogen-containing compound usable for the urethane (urea) resin is one functioning as a chain extender or a crosslinking agent in synthesis for the urethane (urea) resin (B), and from the viewpoint of the heat resistance and the photochromic characteristics of the resultant urethane (urea) resin, a compound having a molecular weight 50 to 300 is preferably used. Specifically, an amino group-containing compound such as a diamine compound or a triamine compound, and a hydroxy group-containing compound such as a diol compound or a triol compound are usable.

Preferred examples of the amino group-containing compound include isophoronediamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl)piperazine, bis-(4-aminocyclohexyl)methane, bis-(4-amino-3-butylcyclohexyl)methane, 1,2-, 1,3- and 1,4-diaminocyclohexane, norbornanediamine, hydrazine, adipic acid dihydrazine, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, and 1,2,5-pentanetriamine.

Among these, from the viewpoint of adhesiveness, heat resistance, photochromic characteristics, and easiness in synthesis of urethane (urea) resin, the amino group-containing compound is preferably an alicyclic compound having 2 amino groups in the molecule. Specifically, use of isophorone diamine, bis-(4-aminocyclohexyl)methane or norbornanediamine is preferred.

Specific examples of compounds preferably usable for the hydroxy group-containing compound include ethylene glycol, diethylene glycol, propylene glycol, dipropylene glycol, butylene glycol, 1,5-dihydroxypentane, 1,6-dihydroxyhexane, 1,7-dihydroxyheptane, 1,8-dihydroxyoctane, 1,9-dihydroxynonane, 1,10-dihydroxydecane, 1,11-dihydroxyundecane, 1,12-dihydroxydodecane, neopentyl glycol, glycerin, trimethylolethane, trimethylolpropane, di(trimethylolpropane), butane-triol, 1,2-methylglucoside, pentaerythritol, dipentaerythritol, and tripentaerythritol. Among these, from the viewpoint of adhesiveness, heat resistance and photochromic characteristics, a hydroxy group-containing compound having 2 or more hydroxy groups in the molecule and having a molecular weight of 50 to 300 (g/mol) is preferred. Specifically, examples of the compound having 2 hydroxy group include ethylene glycol, propylene glycol and 1,4-butanediol. Examples of the compound having 3 or more hydroxy groups include trimethylolpropane, and di(trimethylolpropane).

### Component (B4); reaction terminator

In the present invention, the component (B) may have a reactive group such as an isocyanate group at the terminal thereof, but in the case where a component (C) to be described in detail hereinunder is used, preferably, the terminal thereof is a non-reactive group. Specifically, in the case where a component (C) is blended, the component (B) is preferably such that the isocyanate group remaining at the molecular terminal thereof is reacted with a known monofunctional substance having an active hydrogen group capable of reacting with an isocyanate group (reaction terminator; hereinafter may be simply referred to as "component (B4)") to make the terminal thereof non-reactive. As the reaction terminator, amine, alcohol, thiol and carboxylic acid are usable. Specifically, examples thereof include normal butylamine, sec-butylamine, tert-butylamine, dibutylamine, diisopropylamine, methanol, ethanol, isopropanol, normal butanol, sec-butanol, tert-butanol, acetic acid. Using an antioxidation function-imparting compound or a light stability function-imparting compound as the reaction terminator, a functionality-imparting compound can be introduced into the resultant polyurethane-urea resin and simultaneously the terminal isocyanate group can be deactivated.

### <Amount of Components (B1), (B2), (B3) and (B4) in Urethane (urea) Resin>

The quantitative ratio of the components constituting the adhesive urethane (urea) resin (component (B)) in the photochromic adhesive composition of the present invention, that is, the ratio of the component (B1) and the component (B2) can be appropriately determined in consideration of the use of the urethane (urea) resin, and from the viewpoint of the balance between the heat resistance and the adhesion force of the resultant urethane (urea) resin, the following quantitative ratio is preferred. Specifically, when the total molar number of the hydroxy group contained in the component (B1) is represented by n1, and when the total molar number of the isocyanate group contained in the component (B2) is represented by n2, preferably the quantitative ratio is n1/n2 = (0.2 to 0.8)/1.0, more preferably n1/n2 = (0.3 to 0.7)/1.0. When the component (B) is used as the constituent component in addition to the components (B1) and (B2), the quantitative ratio of the component (B1), the component (B2) and the component (B3) is, from the viewpoint of the balance between the heat resistance and the adhesion force of the resultant urethane (urea) resin, preferably as follows. Specifically, when the total molar number of the hydroxy group contained in the component (B1) is represented by n1, the total molar number of the isocyanate group contained in the component (B2) is by n2, and the total molar number of the active hydrogen group contained in the component (B3) is by n3, preferably, n1/n2/n3 = (0.2 to 0.8)/(1.0)/(0.2 to 0.8), further more preferably, n1/n2/n3 = (0.3 to 0.7)/1.0/(0.3 to 0.7). Here, the above-mentioned n1 to n3 can be calculated as a product of the molar number of the compound used as each component and the number of the groups existing in one molecule of the compound.

In the case where the component (B4) is used to make the terminal have a non-reactive group and when the total molar number of the active hydrogen group contained in the component (B4) is represented by n4;
preferably, the quantitative ratio is n1/n2/n3/n4 = (0.2 to 0.8/1.0/(0.2 to 0.8)/(0.01 to 0.2), more preferably n1/n2/n3/n4 = (0.3 to 0.7/1.0/(0.3 to 0.7)/(0.01 to 0.18). In the case where the component (B4) is used, n2 = n1+n3+n4 = 1.0.

### <Synthesis Method for Component (B), urethane (urea) adhesive resin>

In the case where the component (B1) is reacted with the component (B2) to give the component (B), for example, the component (B) can be favorably produced according to the following method.

### (Synthesis Method)

The component (B1) and the component (B2) are reacted to give a urethane prepolymer, and then the urethane prepolymer is reacted with the component (B3) to give an adhesive urethane (urea) resin to be the component (B).

Regarding the reaction between the component (B1) and the component (B2) in the above-mentioned method, the two can be reacted in the presence or absence of a solvent in an inert gas atmosphere such as nitrogen or argon, at 25 to 120°C for 0.5 to 24 hours. As the solvent, an organic solvent such as methyl ethyl ketone, diethyl ketone, toluene, hexane, heptane, ethyl acetate, dimethylformamide (DMF), dimethylsulfoxide (DMSO) or tetrahydrofuran (THF) can be used. Prior to the reaction, preferably, various reagents and solvents are previously dewatered and fully dried for evading reaction between the isocyanate group in the diisocyanate compound and water as an impurity. During the reaction, a catalyst such as dibutyltin dilaurate, dimethylimidazole, triethylenediamine, tetramethyl-1,6-hexadiamine, or tetramethyl-1,2-ethanediamine, 1,4-diazabicyclo[2,2,2]octane can be used. The amount of the catalyst, when used, is preferably 0.001 to 1 part by mass relative to 100 parts by mass of the total amount of the component (B).

Regarding the reaction between the resultant urethane prepolymer and the component (B3), the two can be reacted in the presence or absence of a solvent in an inert gas atmosphere such as nitrogen or argon at -10 to 100°C for 0.5 to 24 hours. Usable solvents include methanol, ethanol, isopropyl alcohol, t-butanol, 2-butanol, n-butanol, methyl ethyl ketone, diethyl ketone, toluene, hexane, heptane, ethyl acetate, DMF, DMSO, and THF.

In the case where a compound having a trifunctional or higher polyfunctional active hydrogen group is used as the component (B3), a crosslinking structure not dissolving in an ordinary organic solvent is formed, and therefore in the case, a method including mixing the prepolymer produced by reaction of the component (B1) and the component (B2) with the component (B3) to give a photochromic laminate and then reacting the prepolymer and the component (B3) by heating to form the component (B) is preferred for production of the photochromic laminate to be mentioned below.

In the case of using the component (B4), finally, the component (B4) is used to make the terminal have a non-reactive group.

### <Photochromic Adhesive Composition>

The photochromic adhesive composition of the present invention needs to contain the component (A) and the adhesive urethane (urea) resin (B), and to have a softening point of 140 to 220°C.

Specifically, the composition uses the component (A) having a specific molecular chain and contains the adhesive urethane (urea) resin (B), and needs to have a controlled softening point of 140 to 220°C.

In the case where the softening point of the photochromic adhesive composition is lower than 140°C, photochromic characteristics could be good, but such is unfavorable since in a process of producing an optical article to be mentioned hereinunder, the adhesive layer formed of the component (B) tends to soften to give failures. On the other hand, when the softening point is higher than 220°C, such is also unfavorable since photochromic characteristics worsen and the adhesiveness to optical sheets tends to also worsen. In general, it is considered that when a softening point is higher, heat resistance could improve to maintain adhesiveness at high temperatures. However, the present inventors' investigations have revealed that, in the case where the component (A) is used as a photochromic compound, the photochromic adhesive composition could not exhibit adhesiveness at high temperatures and excellent photochromic characteristics when the softening point of thereof is not 140 to 220°C. In consideration of the photochromic characteristics and the adhesiveness at high temperatures, the softening point of the photochromic adhesive composition is more preferably 150 to 200°C, even more preferably 155 to 195°C, further more preferably 160 to 190°C.

In the present invention, the softening point of the photochromic adhesive composition can be controlled by the heat resistance of the component (B), the composition and the blending amount of the component (A) and the blending of the component (C) to be mentioned in detail hereinunder.

### <Production Method for Photochromic Adhesive Composition>

The photochromic adhesive composition of the present invention can be produced by mixing the component (A), the component (B) and other components. The order of mixing the components is not specifically limited.

For example, the constituent components can be melt-kneaded to give a photochromic adhesive composition, which can be then pelletized, or can be molded into sheets. In the case of using an organic solvent, the components can be dissolved in an organic solvent to give a photochromic adhesive composition. The thus-produced photochromic adhesive composition of the present invention can be favorably used as a photochromic adhesive agent especially for bonding optical sheets to each other. Using the adhesive layer formed of the photochromic adhesive composition of the present invention, optical sheets can be bonded to each other to produce a photochromic laminate.

### <Blending amount of photochromic compound (A)>

In the present invention, the blending amount of the photochromic compound is, from the viewpoint of photochromic characteristics, 0.1 to 20.0 parts by mass relative to 100 parts by mass of the component (B). When the blending amount is too small, a sufficient color density and durability could not be attained. On the other hand, when the amount is too large, the photochromic compound could hardly dissolve in the photochromic adhesive composition, though depending on the kind thereof, so that the uniformly of the composition may worsen, and if so, in addition, the adhesion force (sticking force) may lower. In order to sufficiently keep adhesiveness while the photochromic characteristics such as color density and durability are maintained, the amount of the photochromic compound to be added is preferably 0.5 to 20.0 parts by mass relative to 100 parts by mass of the total amount of the resin component, more preferably 1.0 to 15.0 parts by mass.

Also in the present invention, an isocyanate compound (C) having at least one isocyanate group in the molecule (hereinafter may be simply referred to as "component (C)") can be added to prepare a photochromic adhesive composition in which the component (B) is partly crosslinked. Next, the component (C) is described.

### <Component (C); isocyanate compound having at least one isocyanate group in the molecule>

In the photochromic adhesive composition of the present invention, even when the softening point of the adhesive urethane (urea) resin of the component (B) is lower than 140°C, the softening point of the photochromic adhesive composition can be made to be 140°C or higher by adding a component (C). The reason is considered to be because the isocyanate group of the component (C) can act on the urethane (urea) bond in the urethane (urea) resin of the component (B) to cause partial molecular weight increase or crosslinking group formation, thereby resulting in that the softening point of the resultant photochromic adhesive composition is made to fall within a range of 140 to 220°C. As a result, it is presumed that the adhesiveness of the photochromic adhesive composition containing the component (C) to optical sheets and also the heat resistance thereof can be thereby improved. Above all, in the case where the urethane (urea) resin is a non-reactive urethane (urea) resin not having a reactive group at the molecular terminal, and especially when the component (B) whose terminal is made to have a non-reactive group by blending the component (B4) is used, combined use of the component (C) exhibits an excellent effects. In the description given hereinabove, the component (B) having a softening point of lower than 140°C is described, but so far as the softening point of the photochromic adhesive composition to be finally obtained can satisfy the range of 140 to 220°C, naturally, the component (B) having a softening point of 140°C or higher and the component (C) can be used in combination.

Specific examples of the component (C) include isomer mixture of 4,4'-methylenebis(cyclohexyl isocyanate), cyclobutane-1,3-diisocyanate, cyclohexane-1,3-diisocyanate, cyclohexane-1,4-diisocyanate, hexahydrotoluene-2,4-diisocyanate, hexahydrotoluene-2,6-diisocyanate, hexahydrophenylene-1,3-diisocyanate, hexahydrophenylene-1,4-diisocyanate, and isophorone diisocyanate trimer (isocyanurate compound), hexamethylene diisocyanate biuret compound, hexamethylene diisocyanate isocyanurate compound, and hexamethylene diisocyanate adduct compound. One alone or two or more kinds of these may be used either singly or as combined. Above all, use of a polyisocyanate compound selected from the group consisting of 4,4'-methylenebis(cyclohexyl isocyanate) isomer mixture, isophorone diisocyanate trimer (isocyanurate compound), hexamethylene diisocyanate biuret compound, and hexamethylene diisocyanate isocyanurate compound is preferred.

In the present invention, the blending ratio of the component (C) may be appropriately determined depending on the urethane (urea) resin to be used, but is preferably 4.0 to 20 parts by mass relative to 100 parts by mass of the adhesive urethane (urea) resin component (component (B)). When the blending amount is too small, a sufficient effect of enhancing adhesiveness and heat resistance could not be attained. However, when the amount is too large, the urethane (urea) resin may be cloudy and the adhesiveness thereof may lower.

In a production method for the photochromic adhesive composition containing the component (C), a crosslinking structure not dissolving in an ordinary organic solvent may be partly formed. Consequently, the following production method is preferred. Specifically, in production of a photochromic laminate to be described below, a method is preferred in which the component (B) and the component (C) are mixed to prepare a photochromic laminate, and then the component (B) and the component (C) are reacted by heating.

In the present invention, it is considered that, using a partly-crosslinked urethane (urea) resin produced by reacting the component (B) having a relatively low softening point and the component (C), excellent heat resistance and excellent photochromic characteristics could be exhibited. Specifically, it is considered that, since the softening point of the component (B) to be basic is low, the photochromic compound can be readily in a movable (ring-openable/ring-closable) state. With that and taking advantage of this situation, the resin can be partly crosslinked with the component (C) to increase the softening point thereof. In particular, it is considered that, because of this morphology, the effect of using the photochromic compound having a molecular chain having a molecular weight of 300 or more as a substituent can be increased more efficiently. Specifically, from the viewpoint of enhancing the photochromic characteristics, the softening point of the adhesive urethane (urea) resin (B) is preferably 120 to 150°C, more preferably 120 to 140°C. Also preferably, the softening point of the adhesive urethane (urea) resin (B) is lower than the softening point of the photochromic adhesive composition of the present invention, and the difference therebetween (softening point of photochromic adhesive composition - softening point of adhesive urethane (urea) resin (B)) is preferably 5 to 30°C, more preferably 10 to 25°C. When the difference is 5 to 30°C, in particular, the discoloration rate of molded articles (for example, optical articles) to be produced can be lowered to improve photochromic characteristics.

### <Photochromic Adhesive Composition; other additives>

In the present invention, additives may be blended in the photochromic adhesive composition, such as a surfactant, a hindered amine light stabilizer, a hindered phenol antioxidant, a phenolic radical scavenger, a sulfur-based antioxidant, a phosphorus-based antioxidant, a UV stabilizer, a UV absorbent, a release agent, a discoloration inhibitor, an antistatic agent, a fluorescent dye, a dye, a pigment, a fragrance and a plasticizer, in addition to the components of imparting photochromic characteristics. Known compounds can be used with no specific limitation for these additives, and two or more thereof can be used in combination. These additives may be mixed in producing the photochromic adhesive composition. The amount of the additive can be controlled within a range not detracting from the advantageous effects of the present invention. Specifically, the total amount of the additives is preferably within a range of 0.001 to 10 parts by mass relative to 100 parts by mass of the component (B).

For the adhesive layer to be formed of the photochromic adhesive composition, a mixture of the constituent components to constitute the photochromic adhesive composition may be first mixed with an organic solvent to prepare a solution, and the resultant solution may be used for forming the layer. Specifically, in the presence of an organic solvent, a mixture of the constituent components to constitute the photochromic adhesive composition is fully mixed, and a coating layer is formed using the resultant solution. Subsequently, the organic solvent is removed from the coating layer to give an adhesive layer formed of the photochromic adhesive composition. In this case, the softening point of the photochromic adhesive composition (adhesive layer) not containing an organic solvent may be 140 to 220°C.

More specifically, using an organic solvent, the photochromic compound (component (A)), the urethane (urea) resin (component (B)) and the other optional additives can be readily mixed. Accordingly, the uniformity of the photochromic adhesive composition can be thereby improved more. In addition, the viscosity of the photochromic adhesive composition and also the viscosity of mixture of the constituent components of the photochromic adhesive composition can be appropriately controlled. With that, the coatability of the composition in applying to optical sheets can be enhanced and the uniformity in the thickness of the coating layer can also be enhanced. In the case where materials that may be readily corroded by an organic solvent are used for optical sheets, there may occur problems of appearance failure or photochromic behavior degradation, but such problems can be solved by employing a method to be mentioned hereinunder. For the photochromic adhesive composition and for the mixture of the constituent components, various types of organic solvents can be used as described below, and therefore by selectively using a solvent that may hardly corrode optical sheets, the above-mentioned problems can also be solved.

Examples of usable organic solvents include alcohols such as methanol, ethanol, n-propanol, i-propanol, 2-pentanol, 3-pentanol, 3-methyl-2-butanol, 4-methyl-2-pentanol, n-butanol, t-butanol, 2-butanol, t-pentyl alcohol 2,2,2-trifluoroethanol; polyalcohol derivatives such as ethylene glycol monomethyl ether, ethylene glycol monoisopropyl ether, ethylene glycol monoethyl ether, ethylene glycol mono-n-propyl ether, ethylene glycol mono-n-butyl ether, ethylene glycol mono-t-butyl ether, propylene glycol monomethyl ether, propylene glycol monoethyl ether, propylene glycol n-butyl ether, and ethylene glycol dimethyl ether; diacetone alcohol; ketones such as methyl ethyl ketone, diethyl ketone, n-propyl methyl ketone, methyl isobutyl ketone, diisopropyl ketone, and n-butyl methyl ketone; toluene; hexane; heptane; acetates such as ethyl acetate, 2-methoxyethyl acetate, and 2-ethoxyethyl acetate; dimethylformamide (DMF); dimethyl sulfoxide (DMSO); tetrahydrofuran (THF); cyclohexanone; chloroform; dichloromethane, and mixtures thereof.

Among these, any ones can be appropriately selected and used depending on the kind of the component (B) to be used and the material of the optical sheet, but the component (B) may contain an isocyanate group as the case may be, use of an organic solvent not containing a group reactive with an isocyanate group is more preferred. Accordingly, more preferred organic solvents include ketones such as methyl ethyl ketone, diethyl ketone, n-propyl methyl ketone, methyl isobutyl ketone, diisopropyl ketone and n-butyl methyl ketone; acetates such as ethyl acetate, 2-methoxyethyl acetate, and 2-ethoxyethyl acetate; DMF; DMSO; THF; cyclopentanone, cyclohexanone; chloroform; and dichloromethane.

The amount of the organic solvent to be used is not specifically limited, but is preferably 100 to 500 parts by mass relative to 100 parts by mass of the adhesive urethane (urea) resin composition (component (B)).

A photochromic laminate is described below.

### <Photochromic Laminate>

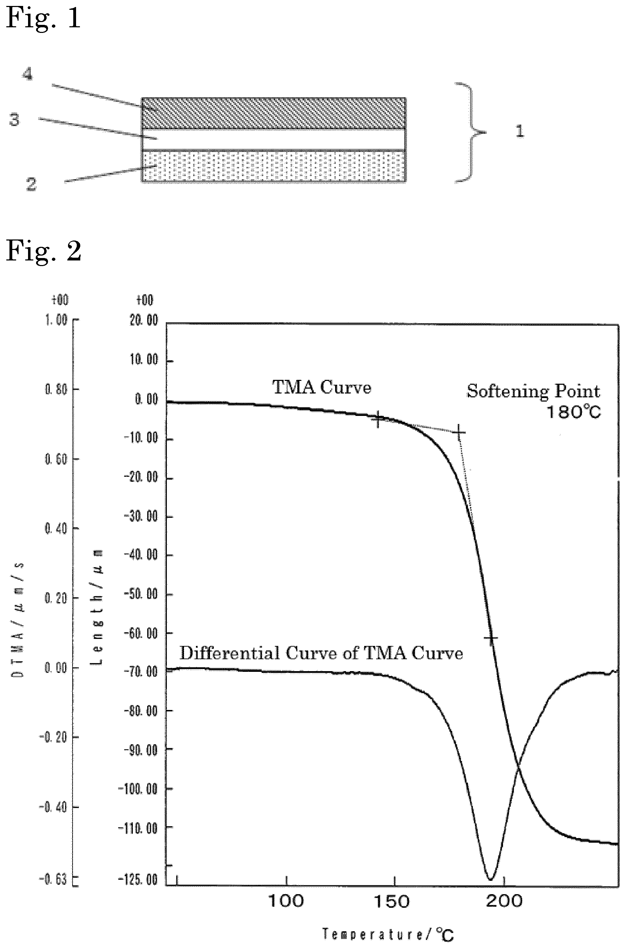

A photochromic laminate includes a laminate structure formed by bonding two optical sheets facing each other via an adhesive layer formed from the photochromic adhesive composition of the present invention. Fig. 1 shows a cross-sectional view of a preferred layer configuration of the photochromic laminate. Fig. 1 is described. Preferably, the photochromic laminate 1 has a laminate structure formed by bonding optical sheets 2 and 4 via an adhesive layer 3 formed from a photochromic adhesive composition. In the present invention, the softening point of the adhesive layer needs to be 140 to 220°C. Optical sheets usable in the photochromic laminae are described.

### <(D) Optical Sheet>

In the present invention, the optical sheet (D) may be any sheet having light permeability and any such sheet is usable with no specific limitation. From the viewpoint of easy availability and easy workability, use of resinous sheets is preferred. Preferred examples of resin as a raw material for the optical sheet (D) include a polycarbonate resin, a polyester resin, a cellulose resin, a polyamide resin, a (meth)acrylic resin, a polyurethane resin, a polyurethane-urea resin, an epoxy resin, a polyimide resin, a polyolefin resin and a polyvinyl alcohol resin. Among these, a polycarbonate resin and a polyamide resin are especially preferred because of the reason that they have good adhesiveness and have wide-range applicability to injection molding.

The thickness of the optical sheet (D) is preferably 20 to 1000 µm, and is, from the viewpoint of the workability of the resultant photochromic laminate, more preferably 50 to 500 µm.

The surfaces (top and back) of the optical sheet (D) for use in the present invention may be surface-treated by chemical treatment using a chemical liquid such as an alkali solution or an acid solution, or by physical surface treatment such as polishing treatment, corona discharge treatment, plasma discharge treatment or UV ozone treatment.

On the surfaces (top and back) of the optical sheet (D) for use in the present invention, a coating layer as follows may be formed. The coating layer may be formed of a resin, a crosslinked product or a composition, such as an aqueous dispersive polymer such as an aqueous dispersive polyurethane resin, an aqueous dispersive polyester resin, an aqueous dispersive acrylic resin, or an aqueous dispersive polyurethane-acrylic resin; a crosslinked product of a carbonyl group-having polymer among the aqueous dispersive polymers, and a hydrazide compound; a crosslinked product of a water-soluble polymer such as polyvinyl alcohol; a composition of a (meth)acrylic group-having polymerizable monomer and/or a hydrolyzable organic silicon compound having a group selected from an epoxy group, a (meth)acrylic group, a vinyl group, an amino group and a mercapto group; a composition of a urethane-urea resin having a polymerizable group selected from a silanol group or a group capable of forming a silanol group through hydrolysis, a (meth)acrylate group, an epoxy group, and a vinyl group; an ene/thiol composition containing a propenyl ether group-containing compound, a polyene compound and a thiol compound, or a photocurable composition containing an oxetane compound. By forming the coating layer especially on the outermost surface (on the side not having a photochromic adhesive sheet thereon), a photochromic laminate of the present invention can be buried in a well compatible manner in a monomer composition to form a thermosetting resin (optical substrate) such as a (meth)acrylate monomer composition, an allyl monomer composition, a thiourethane monomer composition, a urethane monomer composition or a thioepoxy monomer composition. As a result, there can be produced an optical article in which the adhesiveness between the thermosetting resin (optical substrate) and the photochromic laminate is good, and the photochromic laminate is buried in the thermosetting resin (optical substrate).

### <Production Method for Photochromic Laminate>

The photochromic laminate of the present invention can be produced by bonding two optical sheets facing each other via an adhesive layer formed from the photochromic adhesive composition of the present invention. The thickness of the adhesive layer is, from the viewpoint of the color density, the weather resistance and the adhesion strength of the photochromic compound therein, preferably 5 to 100 µm, more preferably 10 to 60 µm.

The adhesive layer can be formed according to the following method. In the case where a mixture prepared by blending a solvent in a photochromic adhesive composition is controlled to have an appropriate viscosity, the mixture is applied onto one optical sheet and then optionally dried (with heating), and thereafter the other optical sheet is pressure-bonded (under heat) thereto.

In the case where a mixture containing a photochromic adhesive composition of the present invention and an organic solvent is used, (I) the mixture is spread on a flat and smooth substrate and then dried to remove the organic solvent, and thereafter the substrate is peeled off to form a photochromic adhesive sheet, and then (II) the photochromic adhesive sheet is put between two optical sheets facing each other and the two optical sheets are bonded to each other via the photochromic adhesive sheet to produce a photochromic laminate of the present invention. In the photochromic laminate obtained after final treatment, the part of the photochromic adhesive sheet is an adhesive layer. The photochromic adhesive composition may be a mixture of the constituent components to constitute the photochromic adhesive composition. In the case where the mixture containing an organic solvent is to be an adhesive layer, an adhesive layer of a photochromic adhesive composition can be formed.

The material for the flat and smooth substrate is preferably one resistant to the solvent for use in the present invention, or one from which the adhesive layer is readily peelable, and specific examples thereof include glass, stainless, Teflon (registered trademark), polyethylene terephthalate, polypropylene, as well as plastic film laminated with a coating layer for enhancing peelability such as a silicone agent or a fluorine agent.

In the case where such a method is employed, it is possible to evade negative influences caused by the use of solvent, irrespective of the kind of the solvent and the kind of the optical sheet.

Among the above-mentioned production methods, where a compound having a trifunctional or higher polyfunctional active hydrogen group is used as the component (B3) to constitute the adhesive urethane (urea) resin of the component (B) in the present invention, a crosslinking structure not dissolving in an ordinary organic solvent is formed. Consequently, the following production method is preferred. Specifically, the method is such that, in producing a photochromic adhesive composition, a urethane (urea) prepolymer composed of the component (A), the component (B1) and the component (B2), and the component (B3) having a trifunctional or higher polyfunctional active hydrogen group are mixed in an organic solvent, and the resultant mixture is applied onto a flat and smooth substrate, and dried to remove the organic solvent while the urethane (urea) prepolymer and the trifunctional or higher polyfunctional active hydrogen group-having component (B3) are reacted to give the component (B).

For the purpose of further improving adhesiveness to optical sheets, the photochromic laminate of the present invention may be such that a different adhesive layer (second adhesive layer) of a urethane (urea) resin not containing a photochromic composition is laminated on both sides of the adhesive layer of the photochromic adhesive composition and two optical sheets are bonded via the adhesive layer to give a photochromic laminate. Specifically, the laminate is a laminate that includes an optical sheet, a second adhesive layer, an adhesive layer of a photochromic adhesive composition, a second adhesive layer and an optical sheet laminated in that order.

For the second adhesive layer, the component (B) may be used as it is. Above all, the component (B) to be used preferably contains the components (B1), (B2) and (B3) in a quantitative ratio of n1/n2/n3 = (0.30 to 0.90)/1/(0.10 to 0.70), more preferably n1/n2/n3 = (0.40 to 0.80)/1/(0.20 to 0.60). In the case where the component (B4) is used, the quantitative ratio of the components in the component (B) to be used is preferably n1/n2/n3/n4 = (0.30 to 0.89/1.0/(0.10 to 0.69)/(0.01 to 0.20), more preferably n1/n2/n3/n4 = (0.40 to 0.80/1.0/(0.15 to 0.58)/(0.01 to 0.15). For the components (B1) to (B4), the same compounds as those mentioned hereinabove for the component (B) can be used for the same reason as above, and the preferred compounds are also the same.

Further, the component (B) to form the second adhesive layer, that is, the second adhesive layer itself preferably has a softening point of 140 to 220°C. In the case where the second adhesive layer is thinner than the adhesive layer formed of a photochromic adhesive composition, it has little impact on the laminate. However, the second adhesive layer may have some influence on the moldability in injection molding to be mentioned hereinunder. Consequently, the softening point of the second adhesive layer is also preferably 150 to 200°C, like that of the photochromic adhesive composition (adhesive layer), more preferably 160 to 190°C. The second adhesive layer does not contain a photochromic compound, and therefore the softening point of the urethane (urea) resin (second adhesive layer) formed not using the component (C) is preferably 140 to 220°C, more preferably 150 to 200°C, even more preferably 155 to 195°C, further more preferably 160 to 190°C. Specifically, not containing a photochromic compound, the softening point of the base resin itself also preferably satisfies the above-mentioned range.

The thickness of the second adhesive layer is not specifically limited, but is preferably 5 to 15 µm. Preferably, a second adhesive layer is provided on both sides of two optical sheets. With that, the ratio of the total thickness of the second adhesive layers to the thickness of the adhesive layer formed of a photochromic adhesive composition (total thickness of second adhesive layers/thickness of adhesive layer) is preferably 0.1 to 0.9, more preferably 0.3 to 0.7.

### [Optical Article]

In the present invention, a synthetic resin layer such as a plastic optical substrate may be laminated on at least one outer surface of the photochromic laminate to give an optical article.

For example, in the present invention, the above-mentioned photochromic laminate and an optical substrate such as a plastic lens body are integrated to give an optical article. The raw material for the optical substrate may be the same as the raw material for the above-mentioned optical sheet. For the method for integration, for example, there can be employed a method including loading the photochromic laminate of the present invention in a mold, and then injection-molding a thermoplastic resin to constitute an optical substrate (for example, lens body) thereinto (hereinafter may be simply referred to as an injection-molding method), or a method of sticking the photochromic laminate to the surface of an optical substrate with an adhesive agent or the like. Another employable method includes immersing the photochromic laminate in a polymerizable monomer capable of forming an optical substrate, and then curing the polymerizable monomer to bury and integrate the photochromic laminate in the optical substrate. Accordingly, the optical article may be one produced by laminating the above-mentioned photochromic laminate on a plastic optical substrate formed of a thermoplastic resin or a thermosetting resin, or may also be one produced by burying the laminate in the plastic optical substrate. For the synthetic resin layer such as the plastic optical substrate, any known resin is usable, including a polyester resin, a polyamide resin, an allyl resin, a (meth)acrylic resin, a polyurethane resin, a polyurethane-urea resin, a polythiourethane resin, a polyepoxy resin, a polythioepoxy resin and a polycarbonate resin.

Prior to being integrated with an optical substrate, the photochromic laminate of the present invention may be bent to have a lens-like spherical surface. Examples of the method for bending the photochromic laminate to have a spherical surface include hot-pressing, pressurization and reduced-pressure suction working.

The temperature in bending can be appropriately determined depending on the type of the optical sheet used in the photochromic laminate, but is preferably higher than 120°C and 200°C or lower.

The bent photochromic laminate is fitted in a mold of an injection-molding machine and the photochromic laminate is then integrated with an optical substrate by injection-molding. For injection-molding, an ordinary injection-molding machine or an injection compression-molding machine is usable. Molding conditions for injection-molding may be appropriately determined depending on the kind and the physical properties of the resin to form the optical substrate. In general, the resin temperature in the molding machine is 180 to 330°C, preferably 200 to 320°C. The injection pressure is 50 to 1700 kg/cm², preferably 70 kg/cm² to 1500 kg/cm².

As presumed because of the excellent heat-resistant effect of the photochromic laminate of the present invention, there was not observed surface strain, or extrusion or peeling from the side surface of the photochromic laminate because of melting of the adhesive layer, even in injection-molding at a higher temperature than in the case of using a urethane resin not having a urea bond as the adhesive layer.

### Examples

The present invention will be described in more detail with reference to some Examples to exemplify the invention.

Abbreviations of the compounds used as components in Examples and Comparative Examples are shown below shortly.

### (Component (A)): photochromic compound

### Synthesis of <PC1>

The following formula (PC1) used in Examples can be produced, for example, with reference to the production method described in WO2009-146509. For example, in WO2009-146509, it can be produced by reacting a naphthopyran compound having a 2-hydroxy-ethoxycarbonyl group and a polydimethylsiloxane having a carboxy group at both terminals. The (average) molecular weight of the molecular chain is 1350. This PC1 is a photochromic compound having the molecular chain as a substituent.

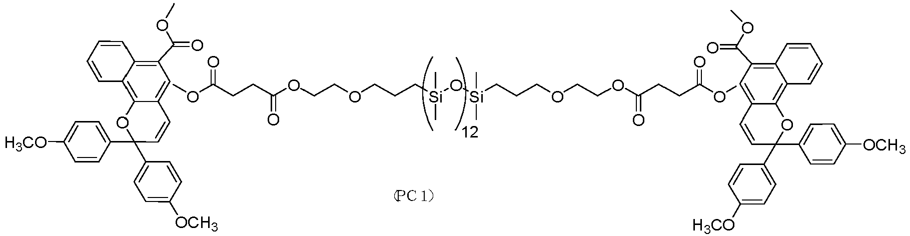

### Synthesis of <PC2>

Like the photochromic compound represented by the above-mentioned formula (PC 1) with reference to the method described in WO2009-146509, this was synthesized by reacting with the corresponding naphthopyran compound. The (average) molecular weight of the molecular chain is 1438. This PC2 is a photochromic compound having the molecular chain as a substituent.

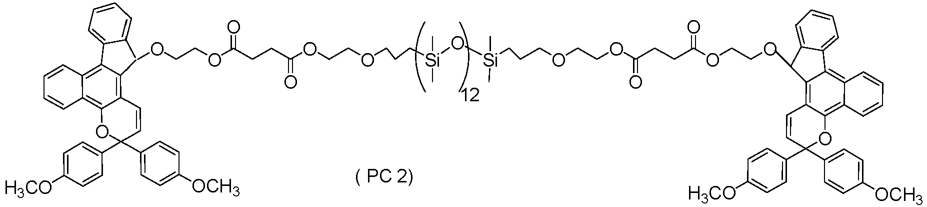

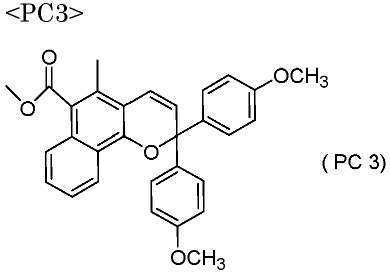

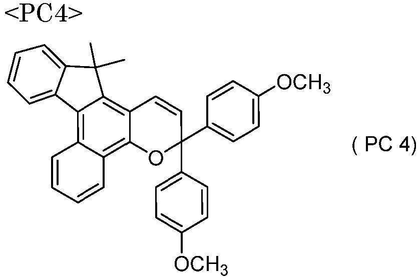

The above PC3 and PC4 are photochromic compound not having a molecular chain.

### Component (B1): polyol compound

PL1: Duranol from Asahi Kasei Corporation (polycarbonate polyol from raw materials of 1,5-pentanediol and hexanediol, number-average molecular weight 500).
PL2: Duranol from Asahi Kasei Corporation (polycarbonate polyol from raw materials of 1,5-pentanediol and hexanediol, number-average molecular weight 800).
PL3: Duranol from Asahi Kasei Corporation (polycarbonate polyol from raw materials of 1,5-pentanediol and hexanediol, number-average molecular weight 1000).
PL4: Duranol from Asahi Kasei Corporation (polycarbonate polyol from raw materials of 1,5-pentanediol and hexanediol, number-average molecular weight 2000).
PL5: Placcel from Daicel Corporation (polycaprolactone polyol, number-average molecular weight 830).
PL6: Placcel from Daicel Corporation (polycaprolactone polyol, number-average molecular weight 1000).

### Component (B2): polyisocyanate compound

NCO1: isomer mixture of 4,4'-methylenebis(cyclohexyl isocyanate)
NCO2: isophorone diisocyanate

### Component (B3): active hydrogen-containing compound

H1: 1,4-butanediol.
H2: isophoronediamine.
H3: bis-(4-aminocyclohexyl)methane.
H4: trimethylolpropane.
H5: di(trimethylolpropane).

### Component (B4): reaction terminator

HA1: 1,2,2,6,6-pentamethyl-4-aminopiperidine.
HA2: n-butylamine.

### Component (C)

C1: isomer mixture of 4,4'-methylenebis(cyclohexyl isocyanate).
C2: hexamethylene diisocyanate trimer (from Asahi Kasei Corporation, trade name Duranate 24A-100).

### Other components

L1: ethylenebis(oxyethylene)bis[3-(5-tert-butyl-4-hydroxy-m-tolyl) propionate] (from Ciba Specialty Chemicals Corporation, Irganox 245).
L2: DOW CORNING TORAY L-7001 (from Toray Dow Corning Corporation, surfactant).

### Organic solvent:

D1: THF (tetrahydrofuran).
D2: propylene glycol monomethyl ether.

### Synthesis of precursor of component (B)

### Synthesis of urethane resin (U1; precursor of component (B))

In a three-neck flask equipped with a stirring blade, a cooling tube, a thermometer and a nitrogen gas inlet tube, 250 g of polycarbonate diol having a number-average molecular weight of 500 (component (B1); PL1), and 262.4 g of 4,4'-methylenebis(cyclohexyl isocyanate) (component (B2); NCO1) were put, and reacted in a nitrogen atmosphere at 100°C for 8 hours to synthesis a prepolymer. The end point of the reaction was confirmed according to a back-titration method for the isocyanate group. After the reaction, the reaction liquid was cooled down to around 30°C, dissolved in 1632 g of THF, and then 31.5 g of a chain extender 1,4-butanediol (component (B3); H1) was dropwise added thereto, and reacted at 25°C for 1 hour to give a THF solution of a urethane resin (U1).

### Synthesis of urethane resin (U2 to U13; component (B))

Using the polyol compound (component (B1)), the polyisocyanate compound (component (B2)) and the active hydrogen-containing compound (component (B3)) shown in Table 1 and in the same manner as in the synthesis method for U1 mentioned hereinabove., U2 to U13 were synthesized. The kind and the molar blending ratio of the components (B1), (B2) and (B3) for U1 to U13 are collectively shown in Table 1.

These U1 to U13 can be used as they are, but in producing photochromic adhesive compositions in Examples and Comparative Examples, the component (B3) was further mixed as a crosslinking agent in the base component (B). Therefore, Table 1 shows the blending ratio of the precursors for the component (B).

**Table 1**

| Urethane (Urea) Resin (Component B) | Constitution of Precursors of Component (B) | | | | | | Organic Solvent | | Molar Blending Ratio of Components (B1), (B2) and (B3) (B1/B2/B3) |
|---|---|---|---|---|---|---|---|---|---|
| | (B1) | | (B2) | | (B3) | | | | |
| | Kind | Amount Added (g) | Kind | Amount Added (g) | Kind | Amount Added (g) | Kind | Amount Added (g) | |
| U1 | PL1 | 250 | NCO1 | 262.4 | H1 | 31.5 | D1 | 1632 | 0.5/1/0.35 |
| U2 | PL2 | 400 | NCO1 | 262.4 | H1 | 31.5 | D1 | 2082 | 0.5/1/0.35 |
| U3 | PL3 | 500 | NCO1 | 262.4 | H1 | 31.5 | D1 | 2382 | 0.5/1/0.35 |
| U4 | PL4 | 500 | NCO1 | 131.2 | H1 | 15.8 | D1 | 1941 | 0.5/1/0.35 |
| U5 | PL5 | 415 | NCO1 | 262.4 | H1 | 31.5 | D1 | 2127 | 0.5/1/0.35 |
| U6 | PL6 | 500 | NCO1 | 262.4 | H1 | 31.5 | D1 | 2382 | 0.5/1/0.35 |
| U7 | PL2 | 200 | NCO1 | 262.4 | H1 | 54 | D1 | 1549 | 0.25/1/0.6 |
| U8 | PL2 | 280 | NCO1 | 262.4 | H1 | 45 | D1 | 1762 | 0.35/1/0.5 |
| U9 | PL2 | 520 | NCO1 | 262.4 | H1 | 18 | D1 | 2401 | 0.65/1/0.2 |
| U10 | PL2 | 600 | NCO1 | 262.4 | H1 | 9 | D1 | 2614 | 0.75/1/0.1 |
| U11 | PL2 | 960 | NCO2 | 222.3 | H1 | 31.5 | D1 | 3641 | 0.5/1/0.35 |
| U12 Comparative Example | PL2 | 120 | NCO1 | 262.4 | H1 | 63 | D1 | 1336 | 0.15/1/0.7 |
| U13 Comparative Example | PL6 | 600.0 | NCO2 | 222.3 | H1 | 9 | D1 | 2494 | 0.85/1/0.1 |

### Synthesis of urethane-urea resin (UU1)

In a three-neck flask equipped with a stirring blade, a cooling tube, a thermometer and a nitrogen gas inlet tube, 350 g of polycarbonate diol having a number-average molecular weight of 500 (component (B1); PL1), and 222.3 g of isophorone diisocyanate (component (B2); NCO2) were put, and reacted in a nitrogen atmosphere at 100°C for 8 hours to synthesis a prepolymer. The end point of the reaction was confirmed according to a back-titration method for the isocyanate group. After the reaction, the reaction liquid was cooled down to around 30°C, dissolved in 2190 g of THF, and then 53 g of a chain extender bis-(4-aminocyclohexyl)methane (component (B3); H3) was dropwise added thereto, and reacted at 25°C for 1 hour, and thereafter 10.5 g of 1,2,2,6,6-pentamethyl-4-aminopiperidine (component (B4)); HA1) was further dropwise added, and reacted at 25°C for 1 hour to give a THF solution of an thane-urea resin (UU1).

### Synthesis of urethane-urea resin (UU2 to UU11)

UU2 to UU11 were synthesized in the same manner as in the synthesis method for UU1 mentioned above, using the polyol compound (component (B1)), the polyisocyanate compound (component (B2)), the active hydrogen-containing compound (component (B3)) and the reaction terminator (component (B4)) shown in Table 2.

The kind and the molar blending ratio of the components B1, B2 and B3 for UU1 to UU11 are collectively shown in Table 2. The softening point of each component (B) prepared separately (that is, UU1 to UU11) is shown in Table 2. The softening point was measured according to the method described in Example 1.

**Table 2**

| Urethane (Urea) Resin (Component B) | Constitution of Component (B) | | | | | | | | Organic Solvent | | Molar Blending Ratio of Components (B1), (B2), (B3) and (B4) (B1/B2/B3/B4) | Softening Point of Component (B) (°C) |
|---|---|---|---|---|---|---|---|---|---|---|---|---|
| | (B1) | | (B2) | | (B3) | | (B4) | | | | | |
| | Kind | Amount Added (g) | Kind | Amount Added (g) | Kind | Amount Added (g) | Kind | Amount Added (g) | Kind | Amount Added (g) | | |
| UU1 | PL1 | 350 | NCO2 | 222.3 | H3 | 53 | HA1 | 10.5 | D1 | 1906 | 0.7/1/0.25/0.1 | 155 |
| UU2 | PL2 | 560 | NCO2 | 222.3 | H3 | 53 | HA1 | 10.5 | D1 | 2536 | 0.7/1/0.25/0.1 | 140 |
| UU3 | PL3 | 700 | NCO2 | 222.3 | H3 | 53 | HA1 | 10.5 | D1 | 2956 | 0.7/1/0.25/0.1 | 132 |
| UU4 | PL4 | 700 | NCO2 | 111.1 | H3 | 26 | HA1 | 5.3 | D1 | 2528 | 0.7/1/0.25/0.1 | 125 |
| UU5 | PL5 | 581 | NCO2 | 222.3 | H3 | 53 | HA1 | 10.5 | D1 | 2599 | 0.7/1/0.25/0.1 | 135 |
| UU6 | PL6 | 700 | NCO2 | 222.3 | H3 | 53 | HA1 | 10.5 | D1 | 2956 | 0.7/1/0.25/0.1 | 120 |
| UU7 | PL2 | 280 | NCO2 | 222.3 | H3 | 147 | HA1 | 17 | D1 | 2000 | 0.25/1/0.7/0.1 | 196 |
| UU8 | PL2 | 392 | NCO2 | 222.3 | H3 | 126 | HA1 | 17 | D1 | 2273 | 0.35/1/0.6/0.1 | 175 |
| UU9 | PL2 | 728 | NCO2 | 222.3 | H3 | 63 | HA1 | 17 | D1 | 3091 | 0.65/1/0.3/0.1 | 155 |
| UU10 | PL2 | 840 | NCO2 | 222.3 | H3 | 42 | HA1 | 17 | D1 | 3364 | 0.75/1/0.2/0.1 | 130 |
| UU11 | PL2 | 350 | NCO1 | 262.4 | H2 | 43 | HA1 | 17 | D1 | 2016 | 0.7/1/0.25/0.1 | 157 |

### Synthesis of urethane-urea resin (W1) for second adhesive layer

In a three-neck flask equipped with a stirring blade, a cooling tube, a thermometer and a nitrogen gas inlet tube, 225 g of polycarbonate diol having a number-average molecular weight of 1000 (component (B1); PL3), and 100 g of isophorone diisocyanate (component (B2); NCO2) were put, and reacted in a nitrogen atmosphere at 100°C for 8 hours to synthesis a prepolymer. The end point of the reaction was confirmed according to a back-titration method for the isocyanate group. After the reaction, the reaction liquid was cooled down to around 30°C, dissolved in 2057 g of propylene glycol monomethyl ether, and then 36 g of a chain extender isophorone-diamine (component (B3); H2) was dropwise added thereto, and reacted at 25°C for 1 hour, and thereafter 2 g of n-butylamine (component (B4)); HA2) was further dropwise added, and reacted at 25°C for 1 hour to give a urethane-urea resin (W1) solution for second adhesive layer. The softening point of the component (W1) prepared separately was 170°C. The softening point was measured according to the method described in Example 1.

### Example 1

### Preparation of Photochromic Adhesive Composition

10 g of the THF solution of urethane resin (U1), 75 mg of the photochromic compound (PC1), 30 mg of trimethylolpropane (component (B3); H4) as a crosslinking agent, 25 mg of ethylenebis(oxyethylene)bis[3-(5-tert-butyl-4-hydroxy-m-tolyl) propionate] as an antioxidant, and 3 mg of DOW CORNING TORAY L-7001 as a surfactant were stirred and mixed at room temperature to prepare a mixture for constituting a photochromic adhesive composition. The blending ratio of each component is shown in Table 3.

The mixture containing an organic solvent was applied to a PET (polyethylene terephthalate) film (from Teijin DuPont Film Corporation, Purex Film, coated with silicone film), dried at 80°C for 5 minutes, and then the PET film was peeled to give a photochromic adhesive sheet having a thickness of about 40 µm. Next, the resultant photochromic adhesive sheet was sandwiched between two polycarbonate sheets each having a thickness of 300 µm, and left at 40°C in vacuum for 24 hours. Subsequently, this was heat-treated at 70°C for 70 hours, then humidified at 60°C and 80% RH for 24 hours, and finally left at 40°C in vacuum for 24 hours to give an intended photochromic laminate having photochromic characteristics. The photochromic adhesive sheet treated as above is an adhesive layer formed of a photochromic adhesive composition.

As photochromic characteristics, the coloration density was 0.9, and the discoloration rate was 40 seconds. The peel strength was 140 N/25 mm in an atmosphere at 23°C, and 20 N/25 mm in an atmosphere at 150°C. The softening point of the photochromic adhesive composition was measured in the manner mentioned below, and the softening point was 190°C. The thickness of the adhesive layer of the photochromic adhesive composition, and use or non-use of a second adhesive layer and the thickness of the second adhesive layer are shown in Table 3.

Next, evaluation methods for these and evaluation methods for the photochromic laminate are described below.

### Softening Point (TMA measurement)

The softening point of a photochromic adhesive composition is a softening point of the adhesive layer formed of the photochromic adhesive composition, and the softening point was measured using a sample prepared according to the method mentioned below. Apart from the laminate, a sample was prepared and measured. Specifically, the same mixture for constituting a photochromic adhesive composition as that used in Examples and Comparative Examples (containing an organic solvent) was applied between two PET films, and dried at 80°C for 5 minutes. Subsequently, the PET film was peeled, heat-treated at 70°C for 70 hours, then humidified at 60°C and 80% RH for 24 hours, and finally left at 40°C in vacuum for 24 hours to prepare a photochromic adhesive sheet (adhesive layer).

The softening point of the resultant photochromic adhesive sheet (adhesive layer) means a softening temperature measured under the following condition using a thermomechanical measurement device (from Seiko Instruments Corporation, TMA120C). The softening point (softening temperature) was measured according to the method described in JIS K7196.
[Measurement Condition] Temperature rise rate: 10°C/min, measurement temperature range: 30 to 250°C, probe: penetration needle probe having a tip diameter of 0.5 mm. The results are shown in Table 3.

### Photochromic Characteristics

A sample of the resultant photochromic laminate was irradiated with a xenon lamp L-2480 (300 W) SHL-100, from Hamamatsu Photonics K.K., via an aeromass filter (from Corning Co., Ltd.) at 23°C and at a beam intensity on the photochromic laminate surface of 365 nm = 2.4 mW/cm² and 245 nm = 24 µW/cm² for 300 seconds for coloration to measure the photochromic characteristics of the photochromic laminate.

1) Maximum absorption wavelength (λmax): This is a maximum absorption wavelength after coloration, as determined using a spectrophotometer from Otsuka Electronics Co., Ltd. (Instantaneous Multichannel Photodirector MCPD 1000). The maximum absorption wavelength relates to color tone in coloration.
2) Coloration density [ε(300) - ε(0)]: This is a difference between the absorbance ε(300) after irradiation for 300 seconds at the maximum absorption wavelength and the absorbance ε(0) in unirradiation at the maximum absorption wavelength. A higher value of the difference indicates more excellent photochromic performance.
3) Discoloration rate [t1/2 (sec.)]: After irradiated for 300 seconds, the photoirradiation is stopped, and the time taken until the absorbance of the sample at the maximum absorption wavelength has lowered to a half (1/2) of [ε(300) - ε(0)] is measured to indicate a discoloration rate. A shorter time means more excellent photochromic performance.

These results are shown in Table 5.

### Peel Strength

The resultant photochromic laminate was cut into a test piece having an adhesive part of 25 × 100 mm, mounted on a tester (Autograph AGS-500NX, from Shimadzu Corporation), and tested in a tensile test at a crosshead speed of 100 mm/min to measure a peel strength of the following 1) and 2).

1) The peel strength in an atmosphere at 23°C was measured according to the above-mentioned test.
2) For measuring the peel strength in an atmosphere at 150°C, the test piece was set in a tester provided with a constant-temperature bath, left in the bath under the condition of 150°C for 10 minutes, and tested in the manner as above.

These results are shown in Table 5.

### (Thermal) Bending Workability

Using a bending machine (CPL32 from LEMA Corporation), the resultant photochromic laminate was bent to have a spherical shape by thermal molding. The photochromic laminate having a size of φ8 cm was set in a concave mold having a suction mouth, and heated at 140°C for 2 minutes under suction. Taken out of the mold, a photochromic laminate worked to have a spherical shape was produced. 20 such bent photochromic laminate sheets were produced, and evaluated in point of the outward appearance thereof. As a result, no appearance failure was confirmed, and the yield was 100%. The results are shown in Table 7.

The outward appearance evaluation was carried out according to the following method.

### Appearance evaluation in bending work

For appearance evaluation, the bent surface of the photochromic laminate was irradiated with a high-pressure mercury lamp, and the projection thereof was visually observed to confirm whether bubbles formed or not in the photochromic laminate. The photochromic laminate that had been bent with no bubbles at all was evaluated as good, while the photochromic laminate that had one or more bubbles by bending was evaluated as not good. The number of no-good laminates is shown in Table 7.

### Injection Moldability

The resultant, bent photochromic laminate was set in a mold having a spherical shape, and heated at 100°C. Polycarbonate resin pellets (Panlite from Teijin Limited) preheated at 120°C for 5 hours were filled into an injection-molding machine, melted under heat at 300°C and at 60 rpm therein, and then injected into the mold with the photochromic laminate set therein, at an injection pressure of 1400 kg/cm² for integration of the laminate with the polycarbonate resin to produce a photochromic eyeglass lens. As a result of appearance evaluation of the photochromic eyeglass lens, no appearance failure was confirmed, and the total yield including (thermal) bending was 100%. For confirmation of the injection moldability, the photochromic laminates alone that had been evaluated as good in the previous (thermal) bending work were used. The results are shown in Table 7. The appearance evaluation was carried out according to the following method.

### Appearance evaluation in injection molding

For appearance evaluation, the photochromic eyeglass lens was irradiated with a high-pressure mercury lamp, and the projection thereof was visually observed to confirm whether or not injection failure owing to melting of the adhesive urethane (urea) resin or bubble formation occurred. The photochromic eyeglass lens having neither injection failure owing to melting of the adhesive urethane (urea) resin nor bubble formation at all was evaluated as good, while the photochromic eyeglass lens that had one or more appearance failures owing to melting of the adhesive urethane (urea) resin or bubbles was evaluated as not good. The number of no-good lenses is shown in Table 7.

### Example 2

### Preparation of photochromic adhesive composition

According to the same method as that for preparing the photochromic adhesive composition (adhesive layer) in Example 1, a mixture to constitute a photochromic adhesive composition was prepared. Table 3 shows the formulation.

### Preparation of adhesive agent for second adhesive layer

2.5 mg of a surfactant DOW CORNING TORAY L-7001 was added to 25 g of a propylene glycol monomethyl ether solution of a urethane-urea resin (W1) for a second adhesive layer, and stirred and mixed at room temperature to prepare an adhesive agent for a second adhesive layer.

### Production of photochromic laminate

The adhesive agent for a second adhesive layer was applied onto a polycarbonate sheet having a thickness of 300 µm, and dried at 110°C for 10 minutes to give a polycarbonate sheet having a second adhesive layer having a thickness of 10 µm.

The mixture to constitute a photochromic adhesive composition was applied onto a PET film (from Teijin DuPont Film Corporation, Purex Film, coated with silicone film), dried at 80°C for 10 minutes, and then the PET film was peeled to give a photochromic adhesive sheet having a thickness of about 40 µm. Next, the resultant photochromic adhesive sheet was sandwiched between two polycarbonate sheets each having the above-mentioned second adhesive layer, and left at 40°C in vacuum for 24 hours, and then heat-treated at 70°C for 70 hours, and humidified at 60°C and 80% RH for 24 hours, and finally left at 40°C in vacuum for 24 hours to give an intended photochromic laminate having photochromic characteristics. The photochromic adhesive sheet treated as above is an adhesive layer formed of a photochromic adhesive composition.

As photochromic characteristics, the coloration density was 0.9, and the discoloration rate was 40 seconds. The peel strength was 180 N/25 mm in an atmosphere at 23°C, and 40 N/25 mm in an atmosphere at 150°C. The softening point of the photochromic adhesive sheet separately prepared according to the same method was 190°C. The thickness of the adhesive layer of the photochromic adhesive composition, and use or non-use of a second adhesive layer and the thickness of the second adhesive layer are shown in Table 3. The thickness of the second adhesive layer in Table 3 is a thickness thereof on one sheet. Consequently, in the case where two sheets are bonded, the total thickness of the second adhesive layer is two times the value in Table 3.

The resultant photochromic laminate was evaluated in the same manner as in Example 1, and the photochromic characteristics and the peel strength thereof are shown in Table 5, and the results in bending work and injection molding are in Table 7.

### Examples 3 to 14

Photochromic adhesive compositions were prepared according to the same method as in Example 2, except that the photochromic compound (A), the adhesive urethane (urea) resin (B) and the active hydrogen-containing compound (B3) shown in Table 3 were used. The softening point of the resultant photochromic adhesive composition was measured according to the same method as in Examples 1 and 2, and shown in Table 3.

Using the photochromic adhesive composition and according to the same method as in Example 1 (not having a second adhesive layer) or Example 2 (having a second adhesive layer), photochromic laminates were produced. The thickness of the adhesive layer of the photochromic adhesive composition, and use or non-use of a second adhesive layer and the thickness of the second adhesive layer are shown in Table 3. The resultant photochromic laminate was evaluated in the same manner as in Example 1, and the photochromic characteristics and the peel strength thereof are shown in Table 5, and the results in bending work and injection molding are in Table 7.

### Comparative Examples 1 to 4

Photochromic adhesive compositions were prepared according to the same method as in Example 1, except that the photochromic compound (A) and the adhesive urethane (urea) resin (B) shown in Table 3 were used. The softening point of the resultant photochromic adhesive composition was measured according to the same method as in Examples 1 and 2, and shown in Table 3.

Using the photochromic adhesive composition and according to the same method as in Example 1 (not having a second adhesive layer) or Example 2 (having a second adhesive layer), photochromic laminates were produced. The thickness of the adhesive layer of the photochromic adhesive composition, and use or non-use of a second adhesive layer and the thickness of the second adhesive layer are shown in Table 3. The resultant photochromic laminate was evaluated in the same manner as in Example 1, and the photochromic characteristics and the peel strength thereof are shown in Table 5, and the results in bending work and injection molding are in Table 7.

**Table 3**

| Example No. | Mixture to constitute photochromic adhesive composition | | | | | | | | | | | Second Adhesive Layer | | Softening Point (°C) |
|---|---|---|---|---|---|---|---|---|---|---|---|---|---|---|
| | Component (A) | | Precursor of Component (B) | | Component (B3) | | Organic Solvent | | Others | | Thickness of adhesive layer (µm) | | | |
| | Kind | Amount Added (mg) | Kind | Amount Added (g) | Kind | Amount Added (mg) | Kind | Amount Added (g) | Kind | Amount Added (mg) | | Kind | Thickness (µm) | |
| Example 1 | PC1 | 75 | U1 | 2.5 | H4 | 30 | D1 | 7.5 | L1/L2 | 25/3 | 40 | - | - | 190 |
| Example 2 | PC1 | 75 | U1 | 2.5 | H4 | 30 | D1 | 7.5 | L1/L2 | 25/3 | 40 | W1 | 10 | 190 |
| Example 3 | PC1 | 75 | U2 | 2.5 | H4 | 30 | D1 | 7.5 | L1/L2 | 25/3 | 40 | W1 | 10 | 168 |
| Example 4 | PC1 | 75 | U3 | 2.5 | H4 | 30 | D1 | 7.5 | L1/L2 | 25/3 | 40 | W1 | 10 | 150 |
| Example 5 | PC1 | 75 | U4 | 2.5 | H4 | 30 | D1 | 7.5 | L1/L2 | 25/3 | 40 | W1 | 10 | 142 |
| Example 6 | PC1 | 75 | U5 | 2.5 | H4 | 30 | D1 | 7.5 | L1/L2 | 25/3 | 40 | W1 | 10 | 163 |
| Example 7 | PC1 | 75 | U6 | 2.5 | H4 | 30 | D1 | 7.5 | L1/L2 | 25/3 | 40 | W1 | 10 | 145 |
| Example 8 | PC1 | 75 | U7 | 2.5 | H4 | 30 | D1 | 7.5 | L1/L2 | 25/3 | 40 | W1 | 10 | 218 |
| Example 9 | PC1 | 75 | U8 | 2.5 | H4 | 30 | D1 | 7.5 | L1/L2 | 25/3 | 40 | W1 | 10 | 202 |
| Example 10 | PC1 | 75 | U9 | 2.5 | H4 | 30 | D1 | 7.5 | L1/L2 | 25/3 | 40 | W1 | 10 | 155 |
| Example 11 | PC1 | 75 | U10 | 2.5 | H4 | 30 | D1 | 7.5 | L1/L2 | 25/3 | 40 | W1 | 10 | 142 |
| Example 12 | PC1 | 75 | U11 | 2.5 | H4 | 30 | D1 | 7.5 | L1/L2 | 25/3 | 40 | W1 | 10 | 154 |
| Example 13 | PC1 | 75 | U2 | 2.5 | H5 | 13 | D1 | 7.5 | L1/L2 | 25/3 | 40 | W1 | 10 | 168 |
| Example 14 | PC2 | 75 | U2 | 2.5 | H4 | 30 | D1 | 7.5 | L1/L2 | 25/3 | 40 | W1 | 10 | 168 |
| Comparative Example 1 | PC1 | 75 | U12 | 2.5 | H4 | 30 | D1 | 7.5 | L1/L2 | 25/3 | 40 | - | - | 240 |
| Comparative Example 2 | PC1 | 75 | U13 | 2.5 | H4 | 10 | D1 | 7.5 | L1/L2 | 25/3 | 40 | - | - | 125 |
| Comparative Example 3 | PC3 | 75 | U2 | 2.5 | H4 | 30 | D1 | 7.5 | L1/L2 | 25/3 | 40 | W1 | 10 | 168 |
| Comparative Example 4 | PC4 | 75 | U2 | 2.5 | H4 | 30 | D1 | 7.5 | L1/L2 | 25/3 | 40 | W1 | 10 | 168 |

### Example 15

### Preparation of photochromic adhesive composition

10 g of a THF solution of a urethane-urea resin (UU1), 82 mg of a photochromic compound (PC1), 250 mg of an isomer mixture of 4,4'-methylenebis(cyclohexyl isocyanate) (component (C); C1), and further, 28 mg of an antioxidant ethylenebis(oxyethylene)bis[3-(5-tert-butyl-4-hydroxy-m-tolyl) propionate] and 3 mg of a surfactant DOW CORNING TORAY L-7001 were stirred and mixed at room temperature to prepare a mixture to constitute a photochromic adhesive composition. The blending ratio of the components is shown in Table 4. The softening point is also shown in Table 4.

### Production of photochromic laminate

The mixture containing an organic solvent mentioned above was applied onto a PET (polyethylene terephthalate) film (from Teijin DuPont Film Corporation, Purex Film, coated with silicone film), dried at 80°C for 5 minutes, and then the PET film was peeled to give a photochromic adhesive sheet having a thickness of about 40 µm. Next, the resultant photochromic adhesive sheet was sandwiched between two polycarbonate sheets each having a thickness of 300 µm, and left at 40°C in vacuum for 24 hours, and then heat-treated at 100°C for 1 hour, and humidified at 60°C and 80% RH for 24 hours, and finally left at 40°C in vacuum for 24 hours to give an intended photochromic laminate having photochromic characteristics. The photochromic adhesive sheet treated as above is an adhesive layer formed of a photochromic adhesive composition.

As photochromic characteristics, the coloration density was 0.9, and the discoloration rate was 45 seconds. The peel strength was 120 N/25 mm in an atmosphere at 23°C, and 15 N/25 mm in an atmosphere at 150°C. The softening point of the photochromic adhesive sheet separately prepared according to the same method was 180°C. The thickness of the adhesive layer of the photochromic adhesive composition, and use or non-use of a second adhesive layer and the thickness of the second adhesive layer are shown in Table 4. The thickness of the second adhesive layer in Table 4 is a thickness thereof on one sheet. Consequently, in the case where two sheets are bonded, the total thickness of the second adhesive layer is two times the value in Table 4.

The resultant photochromic laminate was evaluated in the same manner as in Example 1, and the photochromic characteristics and the peel strength thereof are shown in Table 6, and the results in bending work and injection molding are in Table 7.

### Example 16

### Preparation of photochromic adhesive composition

According to the same method as that for preparing the photochromic adhesive composition in Example 15, a mixture to constitute a photochromic adhesive composition was prepared. Table 4 shows the formulation.

### Preparation of adhesive agent for second adhesive layer

2.5 mg of a surfactant DOW CORNING TORAY L-7001 was added to 25 g of a propylene glycol monomethyl ether solution of a urethane-urea resin (W1) for a second adhesive layer, and stirred and mixed at room temperature to prepare an adhesive agent for a second adhesive layer.

### Production of photochromic laminate

The adhesive agent for a second adhesive layer was applied onto a polycarbonate sheet having a thickness of 300 µm, and dried at 110°C for 10 minutes to give a polycarbonate sheet having a second adhesive layer having a thickness of 10 µm.

The above-mentioned mixture containing an organic solvent was applied onto a PET (polyethylene terephthalate) film (from Teijin DuPont Film Corporation, Purex Film, coated with silicone film), dried at 80°C for 5 minutes, and then the PET film was peeled to give a photochromic adhesive sheet having a thickness of about 40 µm. Next, the resultant photochromic adhesive sheet was sandwiched between two polycarbonate sheets each having a thickness of 300 µm, and left at 40°C in vacuum for 24 hours, and then heat-treated at 100°C for 1 hour, and humidified at 60°C and 80% RH for 24 hours, and finally left at 40°C in vacuum for 24 hours to give an intended photochromic laminate having photochromic characteristics. The photochromic adhesive sheet treated as above is an adhesive layer formed of a photochromic adhesive composition.

As photochromic characteristics, the coloration density was 0.9, and the discoloration rate was 45 seconds. The peel strength was 200 N/25 mm in an atmosphere at 23°C, and 60 N/25 mm in an atmosphere at 150°C. The softening point of the photochromic adhesive sheet separately prepared according to the same method was 180°C. The thickness of the adhesive layer of the photochromic adhesive composition, and use or non-use of a second adhesive layer and the thickness of the second adhesive layer are shown in Table 4.

The resultant photochromic laminate was evaluated in the same manner as in Example 1, and the photochromic characteristics and the peel strength thereof are shown in Table 6, and the results in bending work and injection molding are in Table 7.

### Examples 17 to 33

Photochromic adhesive compositions were prepared according to the same method as in Examples 15 and 16, except that the photochromic compound (A), the adhesive urethane (urea) resin (B) and the component (C) shown in Table 4 were used.

The softening point of the resultant photochromic adhesive composition was measured according to the same method as in Examples 15 and 16, and shown in Table 4.

Using the photochromic adhesive composition and according to the same method as in Example 15 (not having a second adhesive layer) or Example 16 (having a second adhesive layer), photochromic laminates were produced. The thickness of the adhesive layer of the photochromic adhesive composition, and use or non-use of a second adhesive layer and the thickness of the second adhesive layer are shown in Table 4. The resultant photochromic laminate was evaluated in the same manner as in Example 1, and the photochromic characteristics and the peel strength thereof are shown in Table 6, and the results in bending work and injection molding are in Table 7.

### Comparative Examples 5 to 8

Photochromic adhesive compositions were prepared according to the same method as in Examples 15 and 16, except that the photochromic compound (A), the adhesive urethane (urea) resin (B) and the component (C) shown in Table 4 were used.

The softening point of the resultant photochromic adhesive composition was measured according to the same method as in Examples 15 and 16, and shown in Table 4.

Using the photochromic adhesive composition and according to the same method as in Example 15 (not having a second adhesive layer) or Example 16 (having a second adhesive layer), photochromic laminates were produced. The thickness of the adhesive layer of the photochromic adhesive composition, and use or non-use of a second adhesive layer and the thickness of the second adhesive layer are shown in Table 4. The resultant photochromic laminate was evaluated in the same manner as in Example 1, and the photochromic characteristics and the peel strength thereof are shown in Table 6, and the results in bending work and injection molding are in Table 7.

**Table 4**

| Example No. | Mixture to constitute photochromic adhesive composition | | | | | | | | | | | Second Adhesive Layer | | Softening Point (°C) |
|---|---|---|---|---|---|---|---|---|---|---|---|---|---|---|
| | Component (A) | | Component (B) | | Component (C) | | Organic Solvent | | Others | | Thickness of adhesive layer (µm) | | | |
| | Kind | Amount Added (mg) | Kind | Amount Added (g) | Kind | Amount Added (mg) | Kind | Amount Added (g) | Kind | Amount Added (mg) | | Kind | Thickness (µm) | |
| Example 15 | PC1 | 82 | UU1 | 2.5 | C1 | 250 | D1 | 7.5 | L1/L2 | 28/3 | 40 | - | - | 180 |
| Example 16 | PC1 | 82 | UU1 | 2.5 | C1 | 250 | D1 | 7.5 | L1/L2 | 28/3 | 40 | W1 | 10 | 180 |
| Example 17 | PC1 | 82 | UU2 | 2.5 | C1 | 250 | D1 | 7.5 | L1/L2 | 28/3 | 40 | W1 | 10 | 160 |
| Example 18 | PC1 | 82 | UU3 | 2.5 | C1 | 250 | D1 | 7.5 | L1/L2 | 28/3 | 40 | W1 | 10 | 148 |
| Example 19 | PC1 | 82 | UU4 | 2.5 | C1 | 250 | D1 | 7.5 | L1/L2 | 28/3 | 40 | W1 | 10 | 140 |
| Example 20 | PC1 | 82 | UU5 | 2.5 | C1 | 250 | D1 | 7.5 | L1/L2 | 28/3 | 40 | W1 | 10 | 154 |
| Example 21 | PC1 | 82 | UU6 | 2.5 | C1 | 250 | D1 | 7.5 | L1/L2 | 28/3 | 40 | W1 | 10 | 142 |
| Example 22 | PC1 | 82 | UU7 | 2.5 | C1 | 250 | D1 | 7.5 | L1/L2 | 28/3 | 40 | W1 | 10 | 215 |
| Example 23 | PC1 | 82 | UU8 | 2.5 | C1 | 250 | D1 | 7.5 | L1/L2 | 28/3 | 40 | W1 | 10 | 198 |
| Example 24 | PC1 | 82 | UU9 | 2.5 | C1 | 250 | D1 | 7.5 | L1/L2 | 28/3 | 40 | W1 | 10 | 177 |
| Example 25 | PC1 | 82 | UU10 | 2.5 | C1 | 250 | D1 | 7.5 | L1/L2 | 28/3 | 40 | W1 | 10 | 152 |
| Example 26 | PC1 | 82 | UU11 | 2.5 | C1 | 250 | D1 | 7.5 | L1/L2 | 28/3 | 40 | W1 | 10 | 180 |
| Example 27 | PC1 | 82 | UU2 | 2.5 | C2 | 250 | D1 | 7.5 | L1/L2 | 28/3 | 40 | W1 | 10 | 155 |
| Example 28 | PC2 | 82 | UU2 | 2.5 | C1 | 250 | D1 | 7.5 | L1/L2 | 28/3 | 40 | W1 | 10 | 158 |
| Example 29 | PC1 | 82 | UU1 | 2.5 | C1 | 250 | D1 | 7.5 | L1/L2 | 28/3 | 40 | W1 | 3 | 180 |
| Example 30 | PC1 | 82 | UU1 | 2.5 | C1 | 250 | D1 | 7.5 | L1/L2 | 28/3 | 40 | W1 | 7 | 180 |
| Example 31 | PC1 | 82 | UU1 | 2.5 | C1 | 250 | D1 | 7.5 | L1/L2 | 28/3 | 40 | W1 | 14 | 180 |
| Example 32 | PC1 | 164 | UU1 | 2.5 | C1 | 250 | D1 | 7.5 | L1/L2 | 28/3 | 20 | W1 | 8 | 180 |
| Example 33 | PC1 | 55 | UU1 | 2.5 | C1 | 250 | D1 | 7.5 | L1/L2 | 28/3 | 60 | W1 | 10 | 180 |
| Comparative Example 5 | PC1 | 96 | UU2 | 2.5 | C1 | 750 | D1 | 7.5 | L1/L2 | 28/3 | 40 | - | - | 240 |
| Comparative Example 6 | PC1 | 77 | UU2 | 2.5 | C1 | 80 | D1 | 7.5 | L1/L2 | 28/3 | 40 | - | - | 130 |
| Comparative Example 7 | PC3 | 82 | UU2 | 2.5 | C1 | 250 | D1 | 7.5 | L1/L2 | 28/3 | 40 | W1 | 10 | 160 |
| Comparative Example 8 | PC4 | 82 | UU2 | 2.5 | C1 | 250 | D1 | 7.5 | L1/L2 | 28/3 | 40 | W1 | 10 | 160 |

**Table 5**

| | Photochromic Characteristics | | | Peel Strength (N/25 mm) | |
|---|---|---|---|---|---|
| | λmax | Coloration Density | Discoloration Rate | 23°C | 150°C |
| Example 1 | 498 | 0.9 | 40 | 140 | 20 |
| Example 2 | 498 | 0.9 | 40 | 180 | 40 |
| Example 3 | 498 | 0.9 | 34 | 180 | 40 |
| Example 4 | 498 | 0.9 | 30 | 190 | 35 |
| Example 5 | 498 | 0.9 | 24 | 200 | 20 |
| Example 6 | 498 | 0.9 | 32 | 170 | 30 |
| Example 7 | 498 | 0.9 | 28 | 150 | 20 |
| Example 8 | 498 | 0.9 | 52 | 100 | 45 |
| Example 9 | 498 | 0.9 | 47 | 120 | 60 |
| Example 10 | 498 | 0.9 | 32 | 180 | 35 |
| Example 11 | 498 | 0.9 | 27 | 180 | 15 |
| Example 12 | 498 | 0.9 | 35 | 170 | 25 |
| Example 13 | 498 | 0.9 | 45 | 180 | 40 |
| Example 14 | 432 | 0.4 | 20 | 180 | 40 |
| | 554 | 0.7 | | | |
| Comparative Example 1 | 498 | 0.9 | 80 | 50 | 40 |
| Comparative Example 2 | 498 | 0.9 | 30 | 180 | 0 |
| Comparative Example 3 | 498 | 0.9 | 80 | 180 | 40 |
| Comparative Example 4 | 432 | 0.4 | 70 | 180 | 40 |
| | 554 | 0.7 | | | |

**Table 6**

| | Photochromic Characteristics | | | Peel Strength (N/25 mm) | |
|---|---|---|---|---|---|
| | λmax | Coloration Density | Discoloration Rate | 23°C | 150°C |
| Example 15 | 498 | 0.9 | 45 | 120 | 15 |
| Example 16 | 498 | 0.9 | 45 | 200 | 60 |
| Example 17 | 498 | 0.9 | 32 | 200 | 50 |
| Example 18 | 498 | 0.9 | 28 | 200 | 45 |
| Example 19 | 498 | 0.9 | 22 | 200 | 30 |
| Example 20 | 498 | 0.9 | 30 | 180 | 40 |
| Example 21 | 498 | 0.9 | 29 | 165 | 25 |
| Example 22 | 498 | 0.9 | 50 | 120 | 60 |
| Example 23 | 498 | 0.9 | 46 | 175 | 60 |
| Example 24 | 498 | 0.9 | 32 | 180 | 35 |
| Example 25 | 498 | 0.9 | 30 | 180 | 45 |
| Example 26 | 498 | 0.9 | 42 | 190 | 50 |
| Example 27 | 498 | 0.9 | 30 | 180 | 30 |
| Example 28 | 432 | 0.4 | 26 | 200 | 50 |
| | 554 | 0.7 | | | |
| Example 29 | 498 | 0.9 | 45 | 160 | 40 |
| Example 30 | 498 | 0.9 | 45 | 190 | 60 |
| Example 31 | 498 | 0.9 | 45 | 200 | 60 |
| Example 32 | 498 | 0.9 | 50 | 190 | 55 |
| Example 33 | 498 | 0.9 | 45 | 180 | 45 |
| Comparative Example 5 | 498 | 0.9 | 95 | 60 | 50 |
| Comparative Example 6 | 498 | 0.9 | 42 | 190 | 0 |
| Comparative Example 7 | 498 | 0.9 | 95 | 200 | 50 |
| Comparative Example 8 | 432 | 0.4 | 85 | 200 | 50 |
| | 554 | 0.7 | | | |

**Table 7**

| | Bending Workability | | Injection Moldability | | |
|---|---|---|---|---|---|
| | Number of Failures | Yield (%) | Number of Tested Samples | Number of Failures | Overall Yield (%) |
| Example 1 | 0 | 100 | 20 | 0 | 100 |
| Example 2 | 0 | 100 | 20 | 0 | 100 |
| Example 3 | 0 | 100 | 20 | 0 | 100 |
| Example 4 | 0 | 100 | 20 | 2 | 90 |
| Example 5 | 2 | 90 | 18 | 2 | 80 |
| Example 6 | 0 | 100 | 20 | 0 | 100 |
| Example 7 | 2 | 90 | 18 | 2 | 80 |
| Example 8 | 0 | 100 | 20 | 0 | 100 |
| Example 9 | 0 | 100 | 20 | 0 | 100 |
| Example 10 | 0 | 100 | 20 | 2 | 90 |
| Example 11 | 3 | 85 | 17 | 2 | 75 |
| Example 12 | 0 | 100 | 20 | 1 | 95 |
| Example 13 | 0 | 100 | 20 | 0 | 100 |
| Example 14 | 0 | 100 | 20 | 0 | 100 |
| Example 15 | 0 | 100 | 20 | 0 | 100 |
| Example 16 | 0 | 100 | 20 | 0 | 100 |
| Example 17 | 0 | 100 | 20 | 0 | 100 |
| Example 18 | 1 | 95 | 19 | 1 | 90 |
| Example 19 | 3 | 85 | 17 | 1 | 80 |
| Example 20 | 0 | 100 | 20 | 1 | 95 |
| Example 21 | 2 | 90 | 18 | 1 | 85 |
| Example 22 | 0 | 100 | 20 | 0 | 100 |
| Example 23 | 0 | 100 | 20 | 0 | 100 |
| Example 24 | 0 | 100 | 20 | 0 | 100 |
| Example 25 | 1 | 95 | 19 | 0 | 95 |
| Example 26 | 0 | 100 | 20 | 0 | 100 |
| Example 27 | 0 | 100 | 20 | 2 | 90 |
| Example 28 | 0 | 100 | 20 | 0 | 100 |
| Example 29 | 0 | 100 | 20 | 0 | 100 |
| Example 30 | 0 | 100 | 20 | 0 | 100 |
| Example 31 | 0 | 100 | 20 | 1 | 95 |
| Example 32 | 0 | 100 | 20 | 0 | 100 |
| Example 33 | 0 | 100 | 20 | 2 | 90 |
| Comparative Example 1 | 0 | 100 | 20 | 0 | 100 |
| Comparative Example 2 | 16 | 20 | 4 | 4 | 0 |
| Comparative Example 3 | 0 | 100 | 20 | 0 | 100 |
| Comparative Example 4 | 0 | 100 | 20 | 0 | 100 |
| Comparative Example 5 | 0 | 100 | 20 | 0 | 100 |
| Comparative Example 6 | 17 | 15 | 3 | 3 | 0 |
| Comparative Example 7 | 0 | 100 | 20 | 0 | 100 |
| Comparative Example 8 | 0 | 100 | 20 | 0 | 100 |

As obvious from Examples 1 to 33 mentioned above, the photochromic adhesive compositions of the present invention containing (A) a photochromic compound having, as a substituent, a molecular chain having a molecular weight of 300 or more, and (B) an adhesive urethane (urea) resin, and having a softening point of 140 to 220°C have excellent photochromic characteristics, peel strength (adhesiveness), bending workability and injection moldability.

On the other hand, in Comparative Examples 1 to 8, any of the component (A) or the component (B) alone in the present invention is used, and therefore the comparative compositions could not satisfy all of photochromic characteristics, peel strength (adhesiveness), bending workability and injection moldability at the same time.

### Reference Signs List

- 1: Photochromic Laminate
- 2: Optical Sheet
- 3: Adhesive Layer Formed of Photochromic Adhesive Composition
- 4: Optical Sheet

## Claims

1. A photochromic adhesive composition comprising:
(A) a photochromic compound having, as a substituent, a molecular chain having a molecular weight of 300 or more, and
(B) an adhesive urethane (urea) resin,
and having a softening point measured according to the method described in JIS K7196 of 140 to 220°C,
wherein
the photochromic compound (A) has at least one basic skeleton represented by any one of the following formulae (3) to (7) 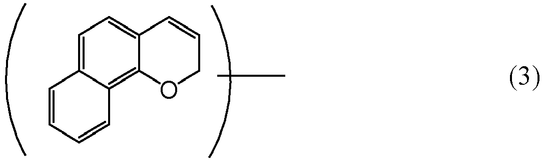 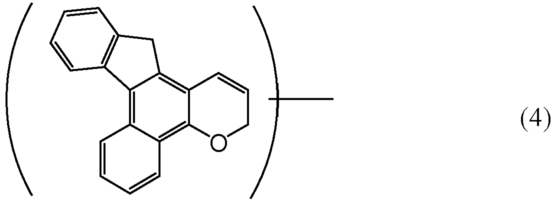 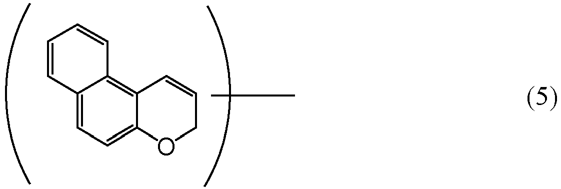 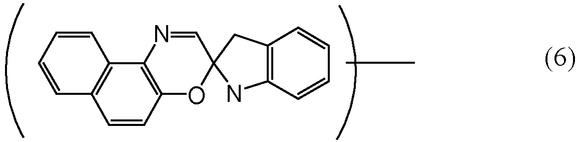 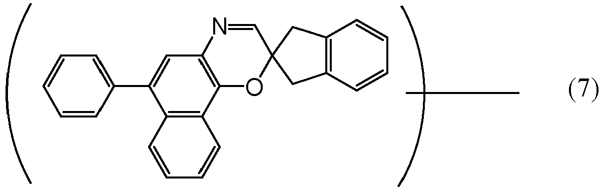
and the blending amount of the photochromic compound (A) is 0.1 to 20.0 parts by mass relative to 100 parts by mass of the adhesive urethane (urea) resin (B).

2. The photochromic adhesive composition according to claim 1, wherein:
the adhesive urethane (urea) resin (B) is a urethane (urea) resin produced by reacting :
(B1) at least one polyol compound selected from a polycarbonate polyol and a polycaprolactone polyol having 2 or more hydroxy groups in the molecule and having a number-average molecular weight of 400 to 3000, and
(B2) a polyisocyanate compound having 2 or more isocyanate groups in the molecule.

3. The photochromic adhesive composition according to claim 2, wherein:
the adhesive urethane (urea) resin (B) is a urethane (urea) resin produced by reacting the component (B1) and the component (B2), and in addition thereto,
(B3) an active hydrogen-containing compound having 2 or more groups capable of reacting with an isocyanate group in the molecule and having a molecular weight of 50 to 300.

4. The photochromic adhesive composition according to any of claims 1 to 3, further comprising (C) an isocyanate compound having at least one isocyanate group in the molecule.

5. The photochromic adhesive composition according to any of claims 1 to 4, wherein the photochromic compound (A) is at least one selected from the following formula (1) and the following formula (2):
PC-(L-Chain) (1)
PC-(L-Chain- L')-PC' (2)
wherein:
PC or PC' is each selected from a compound having a basic skeleton represented by any one of the formulae (3) to (7),
in the basic skeleton, among the carbon atoms or the nitrogen atoms optionally having a substituent, one atom may directly bond to the divalent organic group L or L', and the other atoms may have any other substituent, or
among the carbon atoms or the nitrogen atoms optionally having a substituent, one atom may bond to the divalent organic group L or L' via a substituent, and the other atoms may have any other substituent,
PC and PC' may be the same or different,
L and L' each represent a divalent organic group containing at least one group selected from a (thio)ester group, a (thio)amide group, and the following formulae, and L and L' may be the same or different, 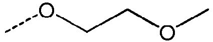 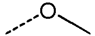 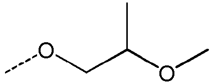 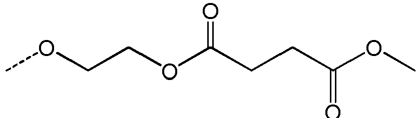 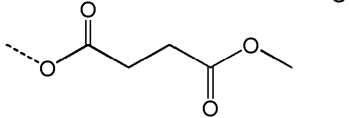 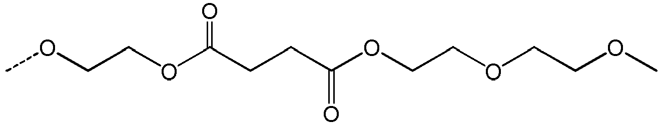 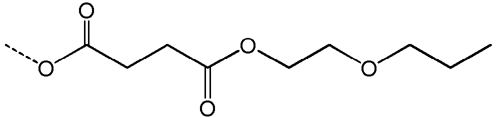 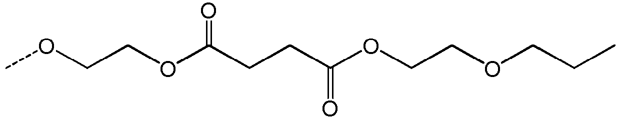
Chain represents a monovalent or divalent organic group containing at least one chain selected from a polysiloxane chain and a polyoxyalkylene chain,
the molecular weight of the total of L and Chain, or L, L' and Chain corresponds to the molecular weight of the molecular chain:
wherein the parenthesized molecular structure in formulae (3) to (7) is a basic skeleton of PC or PC', and the line indicates a bonding to L or L'.

6. The photochromic adhesive composition according to claim 5, wherein the basic skeleton of the photochromic compound (A) is represented by any one of the following formulae (3') to (7'): 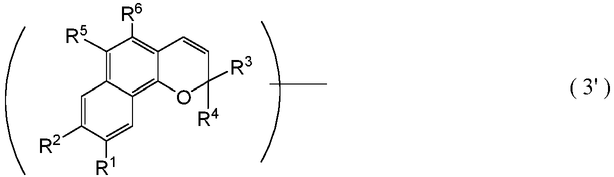 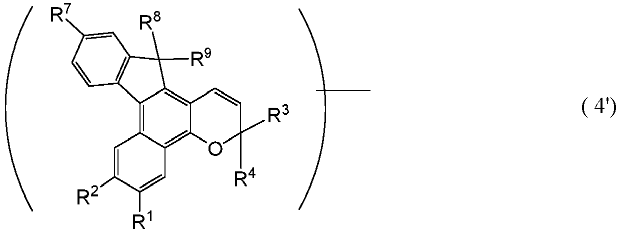 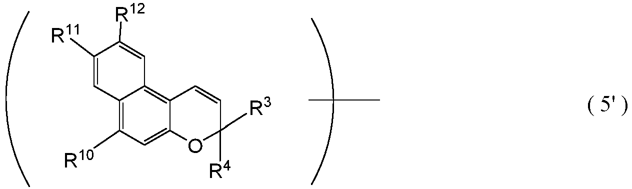 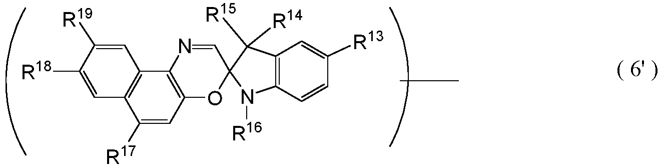 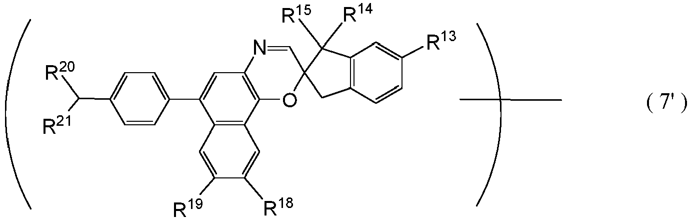 wherein:
R¹ to R²¹ each represent a hydrogen atom, a bond directly bonding to L or L', a substituent, or a group bonding to L or L' via the substituent,
R¹, R², R⁷, R¹⁰, R¹¹, R¹², R¹³, R¹⁷, R¹⁸ and R¹⁹ as the substituent each represent a hydroxy group, an alkyl group having 1 to 6 carbon atoms, a haloalkyl group having 1 to 6 carbon atoms, a cycloalkyl group having 3 to 8 carbon atoms, an alkoxy group having 1 to 6 carbon atoms, an amino group, a heterocyclic group, a cyano group, a halogen atom, an alkylthio group having 1 to 6 carbon atoms, an arylthio group having 6 to 10 carbon atoms, a nitro group, a formyl group, a hydroxycarbonyl group, an alkylcarbonyl group having 2 to 7 carbon atoms, an alkoxycarbonyl group having 2 to 7 carbon atoms, an aralkyl group having 7 to 11 carbon atoms, an aralkoxy group having 7 to 11 carbon atoms, an aryloxy group having 6 to 12 carbon atoms, an aryl group having 6 to 12 carbon atoms, a heteroaryl group having 3 to 12 carbon atoms, a thiol group, an alkoxyalkylthio group having 2 to 9 carbon atoms, a haloalkylthio group having 1 to 6 carbon atoms, or a cycloalkylthio group having 3 to 8 carbon atoms,
R³ and R⁴ as the substituent each represent an aryl group having 6 to 20 carbon atoms and optionally having a substituent, or a heteroaryl group having 3 to 20 carbon atoms and optionally having a substituent, the substituent of the aryl group or the heteroaryl group selected from a hydroxy group, an alkyl group having 1 to 6 carbon atoms, a haloalkyl group having 1 to 6 carbon atoms, a cycloalkyl group having 3 to 8 carbon atoms, an alkoxy group having 1 to 6 carbon atoms, an amino group, a heterocyclic group, a cyano group, a halogen atom, an alkylthio group having 1 to 6 carbon atoms, and an arylthio group having 6 to 10 carbon atoms,
R⁵ and R⁶ as the substituent each represent a halogen atom, a carboxy group, an acetyl group, an alkyl group having 1 to 10 carbon atoms, an alkenyl group having 2 to 10 carbon atoms, an alkoxy group having 1 to 10 carbon atoms, a hydroxyalkyl group having 1 to 10 carbon atoms, an alkyl group having 1 to 10 carbon atoms and substituted with an alkoxy group having 1 to 10 carbon atoms, an aminoalkyl group having 1 to 10 carbon atoms, a cycloalkyl group having 3 to 20 carbon atoms, an aryl group having 6 to 20 carbon atoms, an alkoxycarbonyl group having 2 to 15 carbon atoms, or a heteroaryl group having 3 to 20 carbon atoms, R⁸ and R⁹ as the substituent each represent a hydroxy group, an alkyl group having 1 to 6 carbon atoms, a haloalkyl group having 1 to 6 carbon atoms, a cycloalkyl group having 3 to 8 carbon atoms, an alkoxy group having 1 to 6 carbon atoms, an amino group, a heterocyclic group, a cyano group, a nitro group, an alkoxyalkyl group having 1 to 6 carbon atoms, a formyl group, a hydroxycarbonyl group, an alkylcarbonyl group having 2 to 7 carbon atoms, an alkoxycarbonyl group having 2 to 7 carbon atoms, a halogen atom, an aralkyl group having 7 to 11 carbon atoms, an aralkoxy group having 7 to 11 carbon atoms, an aryl group having 6 to 12 carbon atoms, a thiol group, an alkylthio group having 1 to 6 carbon atoms, a cycloalkylthio group having 3 to 8 carbon atoms, a heterocyclic group, or an arylthio group having 6 to 10 carbon atoms,
R⁸ and R⁹ as the substituent may together form, along with the 13-position carbon atom to which they bond, an aliphatic ring having 3 to 20 ring carbon atoms, a condensed polycyclic ring of the aliphatic ring condensed with an aromatic ring or an aromatic hetero ring, a hetero ring having 3 to 20 ring atoms, or a condensed polycyclic ring of the hetero ring condensed with an aromatic ring or an aromatic hetero ring or they may together form, along with the 13-position carbon atom to which they bond, an aliphatic hydrocarbon ring having 3 to 20 ring carbon atoms, a condensed polycyclic ring of the aliphatic hydrocarbon ring condensed with an aromatic ring or an aromatic hetero ring, a hetero ring having 3 to 20 ring atoms, or a condensed polycyclic ring of the hetero ring condensed with an aromatic ring or an aromatic hetero ring, R¹⁴, R¹⁵, R²⁰, and R²¹ as the substituent each represent a halogen atom, an alkyl group having 1 to 10 carbon atoms, or a cycloalkyl group having 3 to 20 carbon atoms,
R¹⁶ as the substituent represents a halogen atom, an alkyl group having 1 to 20 carbon atoms, a haloalkyl group having 1 to 5 carbon atoms, a dihaloalkyl group having 1 to 5 carbon atoms, a trihaloalkyl group having 1 to 5 carbon atom, a cycloalkyl group having 3 to 20 carbon atoms, a bicycloalkyl group optionally having 6 to 20 carbon atoms, or an aryl group having 6 to 20 carbon atoms.

7. A photochromic laminate comprising a laminate structure formed by bonding two optical sheets (D) facing each other via an adhesive layer formed from the photochromic adhesive composition of any of claims 1 to 6.

8. The photochromic laminate according to claim 7, wherein the optical sheet (D) is formed of a resin selected from a polycarbonate resin, a polyester resin, a cellulose resin, a polyamide resin, a (meth)acrylic resin, a polyurethane resin, a polyurethane-urea resin, an epoxy resin, a polyimide resin, a polyolefin resin and a polyvinyl alcohol resin.

9. An optical article produced by laminating
a synthetic resin layer (E) formed of a resin selected from a polyester resin, a polyamide resin, an allylic resin, a (meth)acrylic resin, a polyurethane resin, a polyurethane-urea resin, a polythiourethane resin, an polyepoxy resin, a polythioepoxy resin and a polycarbonate resin,
on at least one outer surface of the photochromic laminate of claim 7 or 8.

## Patentansprüche

1. Photochrome Klebstoffzusammensetzung, umfassend:
(A) eine photochrome Verbindung, die als Substituent eine Molekülkette mit einem Molekulargewicht von 300 oder mehr aufweist, und
(B) ein klebendes Urethan(harnstoff)harz,
und mit einem Erweichungspunkt, der nach der in JIS K7196 beschriebenen Methode gemessen wird, von 140 bis 220°C
wobei
die photochrome Verbindung (A) mindestens ein Grundgerüst aufweist, das durch eine der folgenden Formeln (3) bis (7) dargestellt wird 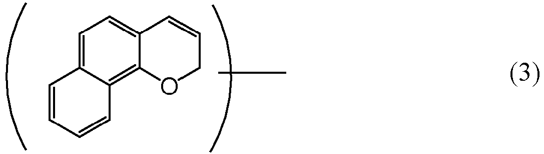 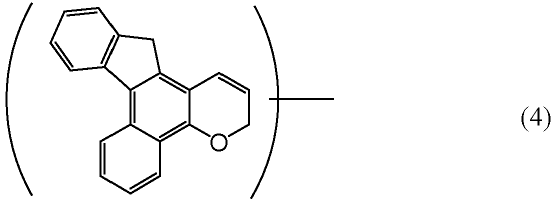 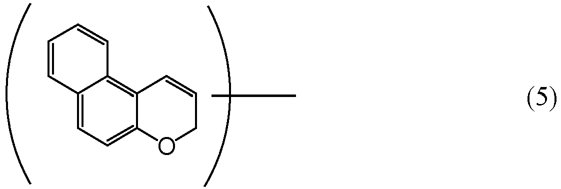 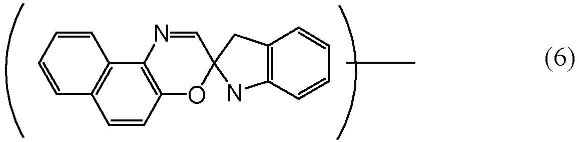 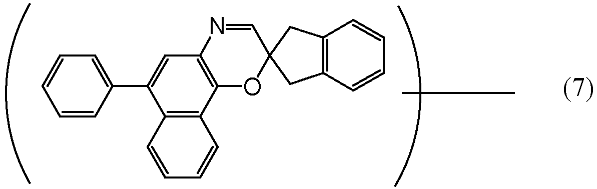
und die Mischungsmenge der photochromen Verbindung (A) 0,1 bis 20,0 Massenteile, bezogen auf 100 Massenteile des klebenden Urethan(harnstoff)harzes (B), beträgt.

2. Photochrome Klebstoffzusammensetzung nach Anspruch 1, wobei:
das klebende Urethan(harnstoff)harz (B) ein Urethan(harnstoff)harz ist, das hergestellt wird durch Umsetzung von:
(B1) mindestens einer Polyolverbindung, ausgewählt aus einem Polycarbonatpolyol und einem Polycaprolactonpolyol mit 2 oder mehr Hydroxygruppen im Molekül und mit einem zahlenmittleren Molekulargewicht von 400 bis 3000, und
(B2) einer Polyisocyanatverbindung mit 2 oder mehr Isocyanatgruppen im Molekül.

3. Photochrome Klebstoffzusammensetzung nach Anspruch 2, wobei:
das klebende Urethan(harnstoff)harz (B) ein Urethan(harnstoff)harz ist, das hergestellt wird durch Umsetzung der Komponente (B1) und der Komponente (B2) und zusätzlich dazu,
(B3) einer aktiven Wasserstoff enthaltenden Verbindung mit 2 oder mehr Gruppen, die mit einer Isocyanatgruppe im Molekül reagieren können, und mit einem Molekulargewicht von 50 bis 300.

4. Photochrome Klebstoffzusammensetzung nach einem der Ansprüche 1 bis 3, ferner umfassend (C) eine Isocyanatverbindung mit mindestens einer Isocyanatgruppe im Molekül.

5. Photochrome Klebstoffzusammensetzung nach einem der Ansprüche 1 bis 4, wobei die photochrome Verbindung (A) mindestens eine ist, die aus der folgenden Formel (1) und der folgenden Formel (2) ausgewählt ist:
PC-(L-Kette) (1)
PC-(L-Kette-L')-PC' (2)
wobei gilt:
PC oder PC' ist jeweils ausgewählt aus einer Verbindung mit einem Grundgerüst, das durch eine der Formeln (3) bis (7) dargestellt wird,
im Grundgerüst kann unter den Kohlenstoffatomen oder den Stickstoffatomen, die gegebenenfalls einen Substituenten aufweisen, ein Atom direkt an die zweiwertige organische Gruppe L oder L' gebunden sein, und die anderen Atome können einen beliebigen anderen Substituenten aufweisen, oder
von den Kohlenstoffatomen oder den Stickstoffatomen, die gegebenenfalls einen Substituenten aufweisen, kann ein Atom über einen Substituenten an die zweiwertige organische Gruppe L oder L' gebunden sein, und die anderen Atome können einen beliebigen anderen Substituenten aufweisen,
PC und PC' können gleich oder verschieden sein,
L und L' stellen jeweils eine zweiwertige organische Gruppe dar, die mindestens eine Gruppe enthält, die aus einer (Thio)estergruppe, einer (Thio)amidgruppe und den folgenden Formeln ausgewählt ist, und L und L' können gleich oder verschieden sein, 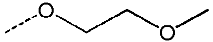 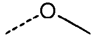 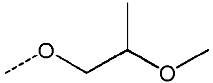 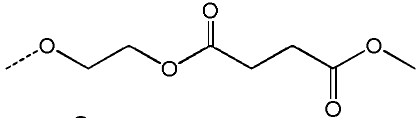 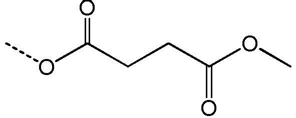 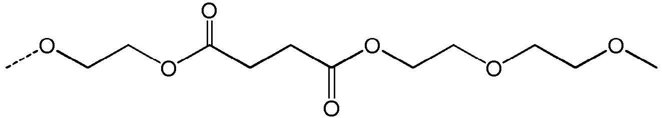 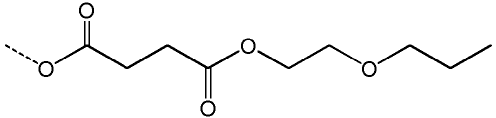 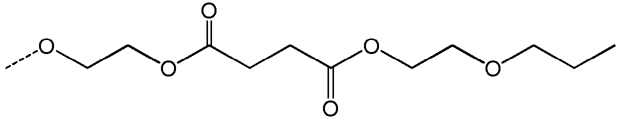
Kette steht für eine ein- oder zweiwertige organische Gruppe, die mindestens eine Kette enthält, die aus einer Polysiloxankette und einer Polyoxyalkylenkette ausgewählt ist,
das Molekulargewicht der Summe von L und Kette oder L, L' und Kette entspricht dem Molekulargewicht der Molekülkette:
wobei die eingeklammerte Molekülstruktur in den Formeln (3) bis (7) ein Grundgerüst von PC oder PC' ist und die Linie eine Bindung an L oder L' anzeigt.

6. Photochrome Klebstoffzusammensetzung nach Anspruch 5, wobei das Grundgerüst der photochromen Verbindung (A) durch eine der folgenden Formeln (3') bis (7') dargestellt wird: 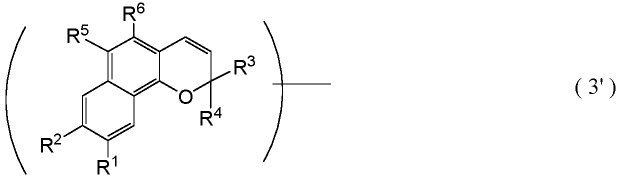 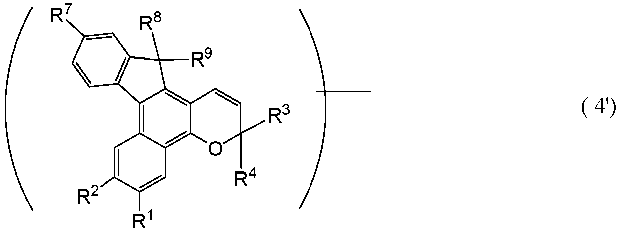 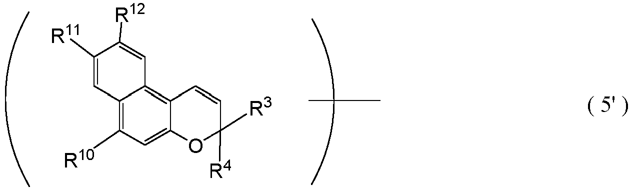 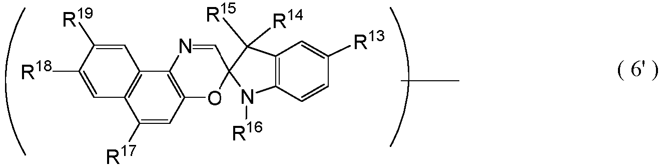 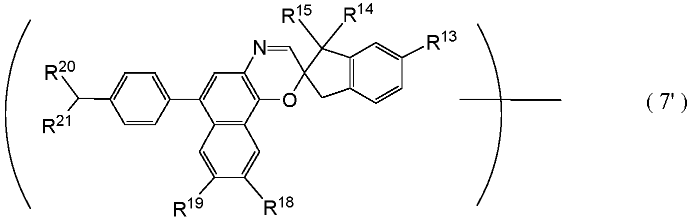 wobei gilt:
R¹ bis R²¹ stellen jeweils ein Wasserstoffatom, eine direkt an L oder L' bindende Bindung, einen Substituenten oder eine über den Substituenten an L oder L' gebundene Gruppe dar,
R¹, R², R⁷, R¹⁰, R¹¹, R¹², R¹³, R¹⁷, R¹⁸ und R¹⁹ stellen als Substituent jeweils eine Hydroxygruppe, eine Alkylgruppe mit 1 bis 6 Kohlenstoffatomen, eine Halogenalkylgruppe mit 1 bis 6 Kohlenstoffatomen, eine Cycloalkylgruppe mit 3 bis 8 Kohlenstoffatomen, eine Alkoxygruppe mit 1 bis 6 Kohlenstoffatomen, eine Aminogruppe, eine heterocyclische Gruppe, eine Cyanogruppe, ein Halogenatom, eine Alkylthiogruppe mit 1 bis 6 Kohlenstoffatomen, eine Arylthiogruppe mit 6 bis 10 Kohlenstoffatomen, eine Nitrogruppe, eine Formylgruppe, eine Hydroxycarbonylgruppe, eine Alkylcarbonylgruppe mit 2 bis 7 Kohlenstoffatomen, eine Alkoxycarbonylgruppe mit 2 bis 7 Kohlenstoffatomen, eine Aralkylgruppe mit 7 bis 11 Kohlenstoffatomen, eine Aralkoxygruppe mit 7 bis 11 Kohlenstoffatomen, eine Aryloxygruppe mit 6 bis 12 Kohlenstoffatomen, eine Arylgruppe mit 6 bis 12 Kohlenstoffatomen, eine Heteroarylgruppe mit 3 bis 12 Kohlenstoffatomen, eine Thiolgruppe, eine Alkoxyalkylthiogruppe mit 2 bis 9 Kohlenstoffatomen, eine Halogenalkylthiogruppe mit 1 bis 6 Kohlenstoffatomen oder eine Cycloalkylthiogruppe mit 3 bis 8 Kohlenstoffatomen dar,
R³ und R⁴ als Substituent stellen jeweils eine Arylgruppe mit 6 bis 20 Kohlenstoffatomen und gegebenenfalls mit einem Substituenten oder eine Heteroarylgruppe mit 3 bis 20 Kohlenstoffatomen und gegebenenfalls mit einem Substituenten dar, wobei der Substituent der Arylgruppe oder der Heteroarylgruppe ausgewählt ist aus einer Hydroxygruppe, einer Alkylgruppe mit 1 bis 6 Kohlenstoffatomen, einer Halogenalkylgruppe mit 1 bis 6 Kohlenstoffatomen, einer Cycloalkylgruppe mit 3 bis 8 Kohlenstoffatomen, einer Alkoxygruppe mit 1 bis 6 Kohlenstoffatomen, einer Aminogruppe, einer heterocyclischen Gruppe, einer Cyanogruppe, einem Halogenatom, einer Alkylthiogruppe mit 1 bis 6 Kohlenstoffatomen und einer Arylthiogruppe mit 6 bis 10 Kohlenstoffatomen,
R⁵ und R⁶ als Substituent stellen jeweils ein Halogenatom, eine Carboxygruppe, eine Acetylgruppe, eine Alkylgruppe mit 1 bis 10 Kohlenstoffatomen, eine Alkenylgruppe mit 2 bis 10 Kohlenstoffatomen, eine Alkoxygruppe mit 1 bis 10 Kohlenstoffatomen, eine Hydroxyalkylgruppe mit 1 bis 10 Kohlenstoffatomen, eine Alkylgruppe mit 1 bis 10 Kohlenstoffatomen und substituiert mit einer Alkoxygruppe mit 1 bis 10 Kohlenstoffatomen, eine Aminoalkylgruppe mit 1 bis 10 Kohlenstoffatomen, eine Cycloalkylgruppe mit 3 bis 20 Kohlenstoffatomen, eine Arylgruppe mit 6 bis 20 Kohlenstoffatomen, eine Alkoxycarbonylgruppe mit 2 bis 15 Kohlenstoffatomen oder eine Heteroarylgruppe mit 3 bis 20 Kohlenstoffatomen dar, wobei R⁸ und R⁹ als Substituent jeweils eine Hydroxygruppe, eine Alkylgruppe mit 1 bis 6 Kohlenstoffatomen eine Halogenalkylgruppe mit 1 bis 6 Kohlenstoffatomen, eine Cycloalkylgruppe mit 3 bis 8 Kohlenstoffatomen, eine Alkoxygruppe mit 1 bis 6 Kohlenstoffatomen, eine Aminogruppe, eine heterocyclische Gruppe, eine Cyanogruppe, eine Nitrogruppe, eine Alkoxyalkylgruppe mit 1 bis 6 Kohlenstoffatomen, eine Formylgruppe, eine Hydroxycarbonylgruppe, eine Alkylcarbonylgruppe mit 2 bis 7 Kohlenstoffatomen, eine Alkoxycarbonylgruppe mit 2 bis 7 Kohlenstoffatomen, ein Halogenatom, eine Aralkylgruppe mit 7 bis 11 Kohlenstoffatomen, eine Aralkoxygruppe mit 7 bis 11 Kohlenstoffatomen, eine Arylgruppe mit 6 bis 12 Kohlenstoffatomen, eine Thiolgruppe, eine Alkylthiogruppe mit 1 bis 6 Kohlenstoffatomen, eine Cycloalkylthiogruppe mit 3 bis 8 Kohlenstoffatomen, eine heterocyclische Gruppe oder eine Arylthiogruppe mit 6 bis 10 Kohlenstoffatomen darstellen,
R⁸ und R⁹ als Substituent können zusammen mit dem Kohlenstoffatom in 13-Stellung, an das sie gebunden sind, einen aliphatischen Ring mit 3 bis 20 Ringkohlenstoffatomen, einen kondensierten polyzyklischen Ring des mit einem aromatischen Ring oder einem aromatischen Heteroring kondensierten aliphatischen Rings, einen Heteroring mit 3 bis 20 Ringatomen oder einen kondensierten polyzyklischen Ring des mit einem aromatischen Ring oder einem aromatischen Heteroring kondensierten Heterorings bilden, oder sie können zusammen mit dem Kohlenstoffatom in 13-Stellung, an das sie gebunden sind, einen aliphatischen Kohlenwasserstoffring mit 3 bis 20 Ringkohlenstoffatomen, einen kondensierten polyzyklischen Ring des mit einem aromatischen Ring oder einem aromatischen Heteroring kondensierten aliphatischen Kohlenwasserstoffrings, einen Heteroring mit 3 bis 20 Ringatomen, oder einen kondensierten polyzyklischen Ring des Heterorings, der mit einem aromatischen Ring oder einem aromatischen Heteroring kondensiert ist, bilden,
R¹⁴, R¹⁵, R²⁰ und R²¹ als Substituent stellen jeweils ein Halogenatom, eine Alkylgruppe mit 1 bis 10 Kohlenstoffatomen oder eine Cycloalkylgruppe mit 3 bis 20 Kohlenstoffatomen dar,
R¹⁶ als Substituent stellt ein Halogenatom, eine Alkylgruppe mit 1 bis 20 Kohlenstoffatomen, eine Halogenalkylgruppe mit 1 bis 5 Kohlenstoffatomen, eine Dihalogenalkylgruppe mit 1 bis 5 Kohlenstoffatomen, eine Trihalogenalkylgruppe mit 1 bis 5 Kohlenstoffatomen, eine Cycloalkylgruppe mit 3 bis 20 Kohlenstoffatomen, eine Bicycloalkylgruppe, die gegebenenfalls 6 bis 20 Kohlenstoffatome aufweist, oder eine Arylgruppe mit 6 bis 20 Kohlenstoffatomen dar.

7. Photochromes Laminat, umfassend eine Laminatstruktur, die durch Verbinden zweier einander gegenüberliegender optischer Folien (D) über eine Klebstoffschicht gebildet wird, die aus der photochromen Klebstoffzusammensetzung nach einem der Ansprüche 1 bis 6 gebildet wird.

8. Photochromes Laminat nach Anspruch 7, wobei die optische Folie (D) aus einem Harz gebildet ist, das aus einem Polycarbonatharz, einem Polyesterharz, einem Zelluloseharz, einem Polyamidharz, einem (Meth)acrylharz, einem Polyurethanharz, einem Polyurethanharnstoffharz, einem Epoxidharz, einem Polyimidharz, einem Polyolefinharz und einem Polyvinylalkoholharz ausgewählt ist.

9. Optischer Gegenstand, hergestellt durch Laminieren
einer Kunstharzschicht (E), die aus einem Harz gebildet ist, das aus einem Polyesterharz, einem Polyamidharz, einem Allylharz, einem (Meth)acrylharz, einem Polyurethanharz, einem Polyurethanharnstoffharz, einem Polythiourethanharz, einem Polyepoxidharz, einem Polythioepoxidharz und einem Polycarbonatharz ausgewählt ist,
auf mindestens einer Außenfläche des photochromen Laminats nach Anspruch 7 oder 8.

## Revendications

1. Composition adhésive photochromique comprenant :
(A) un composé photochromique ayant, comme substituant, une chaîne moléculaire ayant un poids moléculaire de 300 ou plus, et
(B) une résine uréthane (urée) adhésive,
et ayant un point de ramollissement mesuré selon la méthode décrite dans la norme JIS K7196 de 140 à 220°C,
dans laquelle
le composé photochromique (A) possède au moins un squelette de base représenté par l'une des formules suivantes (3) à (7) 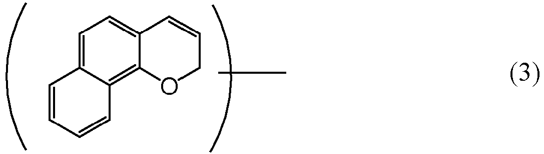 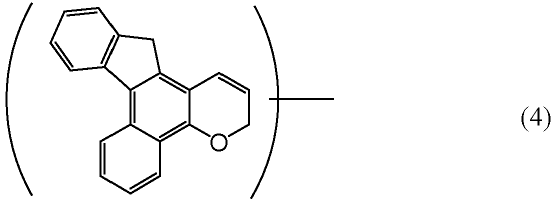 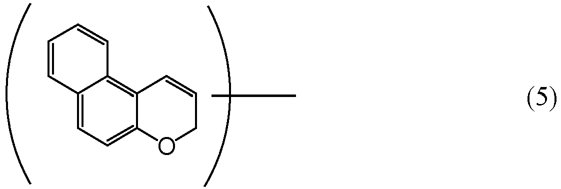 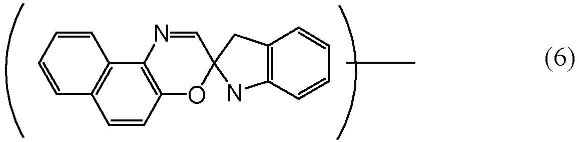 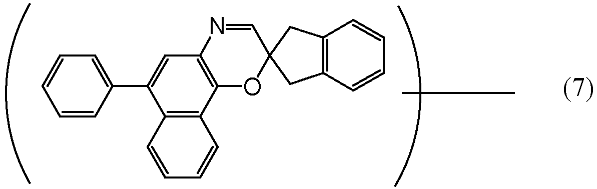
et la quantité de mélange du composé photochromique (A) est comprise entre 0,1 et 20,0 parties en masse par rapport à 100 parties en masse de la résine uréthane (urée) adhésive (B).

2. Composition adhésive photochromique selon la revendication 1, dans laquelle :
la résine uréthane (urée) adhésive (B) est une résine uréthane (urée) produite par réaction de :
(B1) au moins un composé polyol choisi parmi un polycarbonate polyol et un polycaprolactone polyol ayant 2 groupes hydroxy ou plus dans la molécule et ayant un poids moléculaire moyen en nombre de 400 à 3000, et
(B2) un composé de polyisocyanate dont la molécule comporte au moins deux groupes isocyanate.

3. Composition adhésive photochromique selon la revendication 2, dans laquelle :
la résine uréthane (urée) adhésive (B) est une résine uréthane (urée) produite par réaction du composant (B1) et du composant (B2), et en plus,
(B3) un composé contenant de l'hydrogène actif ayant 2 groupes ou plus capables de réagir avec un groupe isocyanate dans la molécule et ayant un poids moléculaire de 50 à 300.

4. Composition adhésive photochromique selon l'une des revendications 1 à 3, comprenant en outre (C) un composé d'isocyanate ayant au moins un groupe isocyanate dans la molécule.

5. Composition adhésive photochromique selon l'une des revendications 1 à 4, dans laquelle le composé photochromique (A) est au moins un composé choisi parmi la formule suivante (1) et la formule suivante (2) :
PC-(L-Chaîne) (1)
PC-(L-Chaîne-L')-PC' (2)
où :
PC ou PC' est choisi parmi les composés dont le squelette de base est représenté par l'une des formules (3) à (7),
dans le squelette de base, parmi les atomes de carbone ou les atomes d'azote ayant éventuellement un substituant, un atome peut se lier directement au groupe organique divalent L ou L', et les autres atomes peuvent avoir n'importe quel autre substituant, ou
parmi les atomes de carbone ou les atomes d'azote ayant éventuellement un substituant, un atome peut se lier au groupe organique divalent L ou L' par l'intermédiaire d'un substituant, et les autres atomes peuvent avoir n'importe quel autre substituant,
PC et PC' peuvent être identiques ou différents,
L et L' représentent chacun un groupe organique divalent contenant au moins un groupe choisi parmi un groupe (thio)ester, un groupe (thio)amide et les formules suivantes, et L et L' peuvent être identiques ou différents, 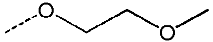 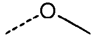 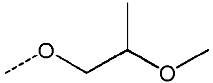 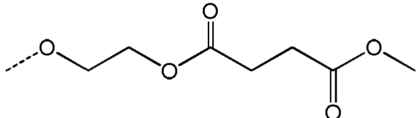 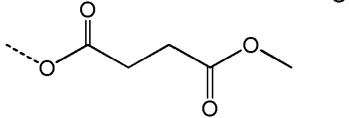 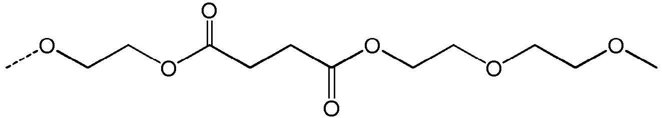 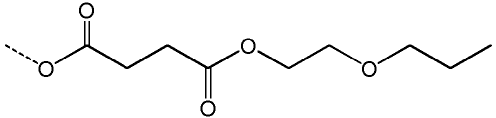 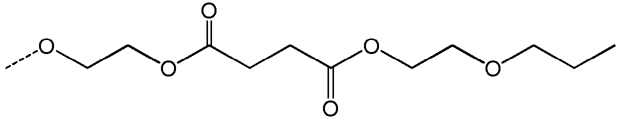
Chaîne représente un groupe organique monovalent ou divalent contenant au moins une chaîne choisie parmi une chaîne de polysiloxane et une chaîne de polyoxyalkylène,
le poids moléculaire de l'ensemble de L et de Chaîne, ou de L, L' et Chaîne correspond au poids moléculaire de la chaîne moléculaire :
où la structure moléculaire entre parenthèses dans les formules (3) à (7) est un squelette de base de PC ou PC', et le trait indique une liaison avec L ou L'.

6. Composition adhésive photochromique selon la revendication 5, dans laquelle le squelette de base du composé photochromique (A) est représenté par l'une des formules suivantes (3') à (7') : 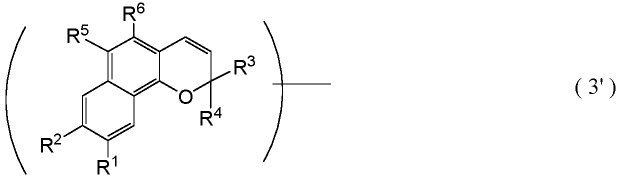 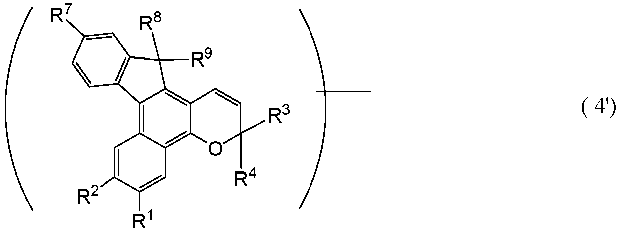 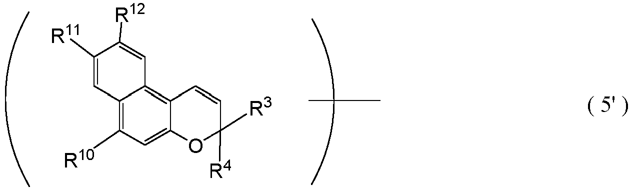 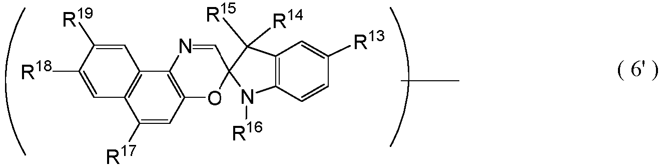 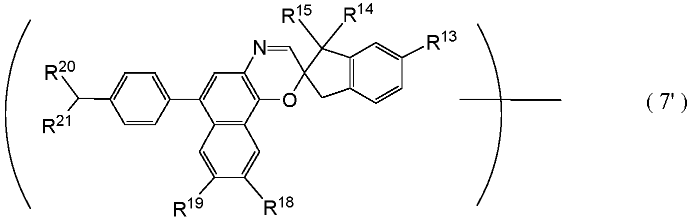 où :
R¹ à R²¹ représentent chacun un atome d'hydrogène, une liaison directe avec L ou L', un substituant ou un groupe lié à L ou L' par l'intermédiaire du substituant,
R¹, R², R⁷, R¹⁰, R¹¹, R¹², R¹³, R¹⁷, R¹⁸ et R¹⁹ en tant que substituant représentent chacun un groupe hydroxy, un groupe alkyle ayant de 1 à 6 atomes de carbone, un groupe haloalkyle ayant de 1 à 6 atomes de carbone, un groupe cycloalkyle ayant de 3 à 8 atomes de carbone, un groupe alcoxy ayant de 1 à 6 atomes de carbone, un groupe amino, un groupe hétérocyclique, un groupe cyano, un atome d'halogène, un groupe alkylthio ayant 1 à 6 atomes de carbone, un groupe arylthio ayant 6 à 10 atomes de carbone, un groupe nitro, un groupe formyle, un groupe hydroxycarbonyle, un groupe alkylcarbonyle ayant 2 à 7 atomes de carbone, un groupe alcoxycarbonyle ayant 2 à 7 atomes de carbone, un groupe aralkyle ayant 7 à 11 atomes de carbone, un groupe aralkoxy ayant 7 à 11 atomes de carbone, un groupe aryloxy ayant 6 à 12 atomes de carbone, un groupe aryle ayant 6 à 12 atomes de carbone, un groupe hétéroaryle ayant 3 à 12 atomes de carbone, un groupe thiol, un groupe alcoxyalkylthio ayant 2 à 9 atomes de carbone, un groupe haloalkylthio ayant 1 à 6 atomes de carbone, ou un groupe cycloalkylthio ayant 3 à 8 atomes de carbone,
R³ et R⁴ en tant que substituant représentent chacun un groupe aryle ayant 6 à 20 atomes de carbone et ayant éventuellement un substituant, ou un groupe hétéroaryle ayant 3 à 20 atomes de carbone et ayant éventuellement un substituant, le substituant du groupe aryle ou du groupe hétéroaryle étant choisi parmi un groupe hydroxy, un groupe alkyle ayant 1 à 6 atomes de carbone, un groupe haloalkyle ayant 1 à 6 atomes de carbone, un groupe cycloalkyle ayant 3 à 8 atomes de carbone, un groupe alcoxy ayant 1 à 6 atomes de carbone, un groupe amino, un groupe hétérocyclique, un groupe cyano, un atome d'halogène, un groupe alkylthio ayant de 1 à 6 atomes de carbone, et un groupe arylthio ayant de 6 à 10 atomes de carbone,
R⁵ et R⁶ en tant que substituant représentent chacun un atome d'halogène, un groupe carboxy, un groupe acétyle, un groupe alkyle ayant de 1 à 10 atomes de carbone, un groupe alcényle ayant de 2 à 10 atomes de carbone, un groupe alcoxy ayant de 1 à 10 atomes de carbone, un groupe hydroxyalkyle ayant de 1 à 10 atomes de carbone, un groupe alkyle ayant de 1 à 10 atomes de carbone et substitué par un groupe alcoxy ayant de 1 à 10 atomes de carbone, un groupe aminoalkyle ayant de 1 à 10 atomes de carbone, un groupe cycloalkyle ayant de 3 à 20 atomes de carbone, un groupe aryle ayant de 6 à 20 atomes de carbone, un groupe alcoxycarbonyle ayant de 2 à 15 atomes de carbone, ou un groupe hétéroaryle ayant de 3 à 20 atomes de carbone, R⁸ et R⁹ en tant que substituant représentent chacun un groupe hydroxy, un groupe alkyle ayant de 1 à 6 atomes de carbone, un groupe haloalkyle ayant de 1 à 6 atomes de carbone, un groupe cycloalkyle ayant de 3 à 8 atomes de carbone, un groupe alcoxy ayant de 1 à 6 atomes de carbone, un groupe amino, un groupe hétérocyclique, un groupe cyano, un groupe nitro, un groupe alcoxyalkyle ayant de 1 à 6 atomes de carbone, un groupe formyle, un groupe hydroxycarbonyle, un groupe alkylcarbonyle ayant de 2 à 7 atomes de carbone, un groupe alcoxycarbonyle ayant 2 à 7 atomes de carbone, un atome d'halogène, un groupe aralkyle ayant 7 à 11 atomes de carbone, un groupe aralkoxy ayant 7 à 11 atomes de carbone, un groupe aryle ayant 6 à 12 atomes de carbone, un groupe thiol, un groupe alkylthio ayant 1 à 6 atomes de carbone, un groupe cycloalkylthio ayant 3 à 8 atomes de carbone, un groupe hétérocyclique ou un groupe arylthio ayant 6 à 10 atomes de carbone,
R⁸ et R⁹ en tant que substituant peuvent former ensemble, avec l'atome de carbone en position 13 auquel ils sont liés, un cycle aliphatique ayant de 3 à 20 atomes de carbone, un cycle polycyclique condensé du cycle aliphatique condensé avec un cycle aromatique ou un hétérocycle aromatique, un hétérocycle ayant de 3 à 20 atomes de carbone, ou un cycle polycyclique condensé du cycle hétéro condensé avec un cycle aromatique ou un hétérocycle aromatique, ou ils peuvent former ensemble, avec l'atome de carbone en position 13 auquel ils sont liés, un cycle hydrocarboné aliphatique ayant de 3 à 20 atomes de carbone, un cycle polycyclique condensé du cycle hydrocarboné aliphatique condensé avec un cycle aromatique ou un hétérocycle aromatique, un hétérocycle ayant de 3 à 20 atomes de carbone, ou un cycle polycyclique condensé du cycle hétéro condensé avec un cycle aromatique ou un cycle hétéro aromatique, R¹⁴, R¹⁵, R²⁰ et R²¹ en tant que substituant représentent chacun un atome d'halogène, un groupe alkyle ayant de 1 à 10 atomes de carbone ou un groupe cycloalkyle ayant de 3 à 20 atomes de carbone,
R¹⁶ en tant que substituant représente un atome d'halogène, un groupe alkyle ayant de 1 à 20 atomes de carbone, un groupe haloalkyle ayant de 1 à 5 atomes de carbone, un groupe dihaloalkyle ayant de 1 à 5 atomes de carbone, un groupe trihaloalkyle ayant de 1 à 5 atomes de carbone, un groupe cycloalkyle ayant de 3 à 20 atomes de carbone, un groupe bicycloalkyle ayant éventuellement de 6 à 20 atomes de carbone, ou un groupe aryle ayant de 6 à 20 atomes de carbone.

7. Stratifié photochromique comprenant une structure stratifiée formée par le collage de deux feuilles optiques (D) se faisant face par l'intermédiaire d'une couche adhésive formée à partir de la composition adhésive photochromique de l'une des revendications 1 à 6.

8. Stratifié photochromique selon la revendication 7, dans lequel la feuille optique (D) est formée d'une résine choisie parmi une résine polycarbonate, une résine polyester, une résine cellulose, une résine polyamide, une résine (méth)acrylique, une résine polyuréthane, une résine polyuréthane-urée, une résine époxy, une résine polyimide, une résine polyoléfine et une résine d'alcool polyvinylique.

9. Article optique produit par laminage
d'une couche de résine synthétique (E) formée d'une résine choisie parmi une résine polyester, une résine polyamide, une résine allylique, une résine (méth)acrylique, une résine polyuréthane, une résine polyuréthane-urée, une résine polythiouréthane, une résine polyépoxy, une résine polythioépoxy et une résine polycarbonate,
sur au moins une surface extérieure du stratifié photochromique selon la revendication 7 ou 8.
